(19) Europäisches Patentamt
European Patent Office
Office européen des brevets

(11) EP 2 437 573 B1

(12) **EUROPEAN PATENT SPECIFICATION**

(45) Date of publication and mention of the grant of the patent:
**11.11.2015 Bulletin 2015/46**

(21) Application number: **10780453.6**

(22) Date of filing: **19.05.2010**

(51) Int Cl.:
***H05B 6/12*** *(2006.01)*

(86) International application number:
**PCT/JP2010/058404**

(87) International publication number:
**WO 2010/137498 (02.12.2010 Gazette 2010/48)**

(54) **INDUCTION HEATING METHOD**

INDUKTIONSERHITZUNGSVERFAHREN

PROCÉDÉ DE CHAUFFAGE PAR INDUCTION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.05.2009 JP 2009126230**

(43) Date of publication of application:
**04.04.2012 Bulletin 2012/14**

(73) Proprietors:
- **Mitsubishi Electric Corporation Chiyoda-ku Tokyo 100-8310 (JP)**
- **Mitsubishi Electric Home Appliance Co., Ltd. Fukaya-shi, Saitama 369-1295 (JP)**

(72) Inventors:
- **SHINDOI, Takashi Tokyo 100-8310 (JP)**
- **SHIKAI, Masahiro Tokyo 100-8310 (JP)**
- **NAKAJIMA, Hajime Tokyo 100-8310 (JP)**
- **SUMI, Kazuhiko Tokyo 100-8310 (JP)**
- **TAKESHITA, Miyuki Tokyo 100-8310 (JP)**
- **SHIMOHATA, Kenji Tokyo 100-8310 (JP)**
- **KINOSHITA, Hirokazu Fukaya-shi, Saitama 369-1295 (JP)**
- **KAMEOKA, Kazuhiro Fukaya-shi, Saitama 369-1295 (JP)**

(74) Representative: **Sajda, Wolf E. et al
Meissner, Bolte & Partner GbR
Postfach 86 06 24
81633 München (DE)**

(56) References cited:
**EP-A1- 2 034 801**
**EP-A2- 1 635 614**
**EP-A2- 2 059 091**
**WO-A1-2007/042316**
**WO-A1-2007/132674**
**DE-A1- 4 428 353**
**JP-A- 2009 163 894**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 437 573 B1

## Description

### Technical Field

The present invention relates to an induction-heating cooking system and an induction-heating cooking thereof, and in particular, to the induction-heating cooking system and the induction-heating cooking method, which is operable to instantly determine material and standing situation of a heated body and capable to optimize driving condition thereof.

### Background Art

Several induction-heating cooking systems have been proposed, in which when a heated body such as a pan stands off a center of a heating region, a power supply is halted to a induction-heating coil for precluding void power consumption, i.e., undesired power consumption that gives no contribution to heat the pan. Also, some of induction-heating cooking systems have been suggested, in which, when a small metal object such as a spoon and a scoop stands over the induction-heating coil, the induction-heating coil is not supplied with electric power to avoid heating those small objects.

For example, Patent Document 1 (JP 61-029117 B) discloses a induction-heating cooking oven including a small-load detecting device which is adapted to measure parameters such as an input current to an inverter circuitry and a collector voltage of a power semiconductor switching element, and detect whether the heated body is a small object by determining whether those parameters are in a predetermined region of a plotted graph or a map (Fig, 2 of Patent Document 1) between the input current and the collector voltage. Also, Patent Document 1 teaches detecting whether the heated body is a small object by comparing an input current to the induction-heating coil with the input current.

Also, Patent Document 2 (JP 2882060 B) suggests a method for detecting no-load driving (void power consumption) of the inverter for the induction-heater, which is operable to measure parameters such as input current and output current of the inverter, and to determine whether the measured parameter is within an enlarged no-load-driving detection region of a graph or map between those parameters (Fig. 2 of Patent Document 2) to avoid the no-load driving of the inverter.

Further, Patent Document 3 (JP 2745247 B) discloses an electromagnetic inductive heating cooker, which measures a drive frequency and a phase angle of an inverter circuitry and detects material of the pan by means of a matrix or a graph (Fig. 2 of Patent Document 3). Also, it suggests that the cooker can precisely determine any intermediate material between magnetic and non-magnetic materials such as stainless based upon measurement of the drive frequency and the current through the inductive heating coil.

Document EP 2 034 801 A1 discloses an induction cooking device which provides a user with an improved set of cooking instructions regarding capabilities of cookware to be used with the device.

### Summary of Invention

### Problems to be Solved by the Invention

According to the induction-heating cooking heater of Patent Document 1, the input current to the inverter has to be measured for a time corresponding to at least a half cycle of a commercial power supply. Furthermore, in order to remove an effect of noises or artifacts appeared in the input current, much more time is required to measure the input current for average. Therefore, in the induction-heating cooking heater of Patent Document 1, the heated body should be heated for a substantial time of at least several tens of milliseconds to determine whether the heated body is a small object, which may lead substantial heating of the small object.

Also, according to the method of Patent Document 2 for detecting no-load driving of the inverter for the induction-heater, the input current to the inverter should be collected also for a substantial time corresponding to at least a half cycle of the commercial power supply, and thus, at least several tens of milliseconds is required until determining no-load driving of the inverter.

Furthermore, according to the electromagnetic inductive heating cooker of Patent Document 3, while the graph showing the relationship between the drive frequency and the phase angle of the inverter circuitry which are unique to the material of the pan is used, the graph requires a frequency sweeping performed in a range, e.g., from 1 kHz through 70 kHz, which again needs a substantial time. During the frequency sweeping for measuring the drive frequency and the phase angle of the inverter circuitry, the heated body may be heated under the same driving power irrelevantly to material of the pan, thus possibly leading substantial heating of the heated body.

Accordingly there is still a demand to develop an advanced technique to determine existence, standing situation, and material of the heated body and/or existence of the small object over the heating coil, in a more prompt manner than the conventional induction-heating cooking systems. Also, an induction-heating cooking system and an induction-heating cooking method are highly expected, which optimizes a driving condition based upon the instant determination of the existence, standing situation, and material of the individual heated body.

Means for Solving the Problems

To address the above drawbacks, the present invention provides a method for operating an LCR induction-heater having a heating coil and a resonance capacitor connected in series in accordance with independent claim 1. Further embodiments of the invention may be realized in accordance with the dependent claims. An exemplary LCR induction heater also includes a drive circuitry adapted to supply a high-frequency current of a given drive frequency to the heating coil, a drive voltage detector adapted to detect a drive voltage across the LCR induction-heater, and a drive current detector adapted to detect a drive current through the LCR induction-heater. Further it includes a primary-component extractor adapted to extract a primary drive voltage and a primary drive current from the detected drive voltage and the detected drive current, each of the primary drive voltage and the primary drive current having a frequency equal to the drive frequency.

An exemplary induction-heating cooking system includes a controller adapted to calculate a resonance frequency (or a inductance) and a load resistance based upon the primary drive voltage and the primary drive current, and to determine whether an electric power is to be supplied or halted to the LCR induction-heater in accordance with the resonance frequency (or the inductance) and the load resistance. Furthermore, the induction-heating cooking system determine the optimized driving condition in accordance with the resonance frequency (or the inductance) and the load resistance.

Advantage of the Invention

According to one embodiment of the present invention, the induction-heating cooking system is operable to determine material and standing situation of a heated body in an instant manner (within about several tens of microseconds) and capable to quickly determine whether or not the heated body is heated, and the optimized driving condition for each of the heated body to be heated.

Brief Description of the Drawings

| | |
|---|---|
| Fig. 1 | is a schematic circuit block diagram of an induction-heating cooking system according to Example 1 of the present invention. |
| Fig. 2 | is a waveform chart showing a drive voltage detected by a drive voltage detector and a drive current detected by a drive current detector. |
| Figs. 3A, 3B, and 3C | are top plane views of disks (a pseudo-pan) made of various materials over a heating coil. |
| Figs. 4A and 4B | are maps (charts) showing a relationship between resonance frequency and load resistance of disks made of various materials which are rested at different positions over the heating coil. |
| Figs. 5A and 5B | are maps (charts) showing a relationship between inductance and load resistance of disks made of various materials which are rested at different positions over the heating coil. |
| Fig. 6 | is a circuit block diagram of the induction-heating cooking system according to Example 2 of the present invention. |
| Fig. 7 | is a top plane view of multiple heating coils of the induction-heating cooking system according to Example 4 of the present invention. |
| Fig. 8 | is a circuit block diagram of the induction-heating cooking system having a phase corrector according to Embodiment 6 of the present invention. |
| Fig. 9 | is a waveform diagram of varying voltage output from a full-wave rectifying circuit. |
| Fig. 10 | is a conceptual diagram showing a low-rate sampling process allowing the drive voltage detector and the drive current detector to detect the drive voltage and the drive current, respectively. |
| Fig. 11 | is a waveform chart of a driving control signal for a full-bridge driver circuit. |
| Fig. 12 | is a chart showing a relationship between a phase width and a first order component coefficient of the drive voltage for the full-bridge driver circuit. |
| Fig. 13 | is a waveform chart of a driving control signal for a half-bridge driver circuit. |
| Fig. 14 | is a chart showing a relationship between a phase width and a first order component coefficient of the drive voltage for the half-bridge driver circuit. |

Description of Embodiments

Referring to attached drawings, embodiments of an induction-heating cooking system according to the present invention will be described herein. Similar components are denoted with similar reference numerals throughout the description and drawings.

Example 1.

With reference to Figs. 1 to 5, Example 1 of the induction-heating cooking system will be described herein. Fig. 1 is a schematic circuit block diagram of an induction-heating cooking system according to Example 1. The induction-heating cooking system 1 generally includes a rectifying circuitry 12, a drive circuitry 14, a LCR induction-heater 20, a drive voltage detector 30, and a drive current detector 32. The rectifying circuitry 12 is operable to rectify two-phase or three-phase alternate current from commercial power source 10 to direct current.

The drive circuitry 14 is adapted to supply high-frequency current of a given drive frequency to a heating coil 22. The LCR induction-heater 20 is composed of the heating coil 22 and a resonance capacitor 24 connected in series each other. The drive voltage detector 30 is adapted to detect drive voltage across the LCR induction-heater 20, and the drive current detector 32 is adapted to detect drive current through the LCR induction-heater 20.

More specifically, the rectifying circuitry 12 may be adapted for full-wave or half-wave rectification, and may include a filtering circuitry having an inductance for forming direct component and a capacitor (not shown). Also, the drive circuitry 14 may be composed of an inverter having a plurality of switching elements such as IGBTs (not shown), which may be any type of inverter, for example, a half-bridge inverter circuit and a full-bridge inverter circuit.

As explained above, the LCR induction-heater 20 is composed of the heating coil 22 and the resonance capacitor 24 connected in series each other, and the heating coil 22 is denoted in Fig .1, as equivalent circuits of inductance **L** and load resistance **R**. In this drawing, illustrated above the inductance **L** is the heated body P such as a pan P. When supplied with high-frequency current, the heating coil 22 generates alternate magnetic field which magnetically links with the heated body P made of conductive material, and causes eddy current within the heated body P, thereby heating the heated body P itself.

In general, the load resistance **R** of the LCR induction-heater 20 varies along with existence and/or standing situation (size and set position) of the heated body P, i.e., along with alternate magnetic field which magnetically links with the heated body P. Thus, the load resistance **R** of the LCR induction-heater 20 is equivalent to the wiring resistance $\mathbf{R_C}$ of the heating coil 22 when no pan P stands over the heating coil, in addition with an apparent resistance $\mathbf{R_L}$ of the heating coil 22 appeared when the pan P is set over the heating coil (i.e., $\mathbf{R} = \mathbf{R_C} + \mathbf{R_L}$).

It should be noted that any type of voltage detectors commonly known in the art may be used as the drive voltage detector 30 for detecting the drive voltage (output voltage) **V** across the LCR induction-heater 20. Also, any type of current detectors may be utilized as the drive current detector 32 for detecting the drive current (output current) **I** through the LCR induction-heater 20, for which a current transformer is used in Example 1.

The induction-heating cooking system 1 of the present invention further includes a primary-component extractor 40 electrically connected with the drive voltage detector 30 and the drive current detector 32. As described above, while the drive circuitry 14 is an inverter having switching elements such as IGBTs (Insulated Gate Bipolar Transistors), each of IGBTs of the drive circuitry 14 is driven by a control signal (gate signal) having a given drive frequency (30 kHz, for example), the drive voltage detector 30 and the drive current detector 32 detect the high-frequency modulated drive voltage **V** and drive current **I**, as shown in Fig. 2, which contain a plurality of orders of the drive voltage **V** and drive current **I**, respectively.

The high-frequency modulated drive voltage **V** and drive current **I** are generally expressed as a composite waveform containing multiple orders of drive voltage waveforms and drive current waveforms, respectively. The primary-component extractor 40 according to the present Example is adapted to extract only the primary components of the detected drive voltage **V** and the detected drive current **I** (as shown in Fig. 2), each of which has the same frequency as the drive frequency.

The primary-component extractor 40 is adapted to extract them, by sampling data of the drive voltage **V** and the drive current **I** at a sampling frequency equal to several times (integral multiple) of the drive frequency, and performing a discrete Fourier transformation with the sampled data of the drive voltage **V** and the drive current **I**. It should be noted that the primary-component extractor 40 may utilize any type of commercially available algorisms for extracting the primary components (first order of sampled data) of the drive voltage **V** and the drive current **I** from the multiple orders of sampled data.

Meanwhile, the primary-component extractor 40 is design to process the primary components of the drive voltage **V** and the drive current **I** as expressed by a complex notation as follows:

$$V_1 = V_{1\,\mathrm{Re}} + j \times V_{1\,\mathrm{Im}}$$
$$I_1 = I_{1\,\mathrm{Re}} + j \times I_{1\,\mathrm{Im}} \quad (1),$$

wherein $\mathbf{V_1}$, $\mathbf{I_1}$ denote the primary components of the drive voltage **V** and the drive current **I**, respectively; $\mathbf{V_{1Re}}$, $\mathbf{I_{1Re}}$ denote real parts of $\mathbf{V_1}$, $\mathbf{I_1}$; $\mathbf{V_{1Im}}$, $\mathbf{I_{1Im}}$ denote imaginary parts of $\mathbf{V_1}$, $\mathbf{I_1}$; and ***j*** stands an imaginary unit.

The impedance **Z** of the LCR induction-heater 20 and the phase shift 0 between the drive voltage $\mathbf{V_1}$ and the drive current $\mathbf{I_1}$ (the phase of the drive voltage $\mathbf{V_1}$ over the drive current $\mathbf{I_1}$, or the phase of the impedance Z) are expressed as follows:

$$Z = V_1 / I_1$$
$$\theta = \arctan\left(\mathrm{Im}(Z) / \mathrm{Re}(Z)\right) \quad (2),$$

wherein Im(Z) and Re(Z) denote real part and imaginary part of the impedance **Z**, respectively. The phase shift θ may be expressed with the "arcsine" or the "arccosine" instead of the "arctangent", which may be more beneficial because the "arctangent" likely diverges and contains much calculation errors at the phase shift θ close to 90°.

The induction-heating cooking system 1 of the present invention further includes a controller 50 electrically connected both to the drive circuitry 14 and the primary-component extractor 40 as illustrated in Fig. 1. The controller 50 of the present invention is adapted to calculate the impedance **Z** of the LCR induction-heater 20 and the phase shift (argument) θ between the drive voltage $\mathbf{V_1}$ and the drive current $\mathbf{I_1}$ based upon above formula (2), and to apply a series of appropriate driving control signals (gate signals) to the drive circuitry 14 accordingly.

Furthermore, the controller 50 of the present invention is adapted to calculate effective electric power $\mathbf{W_E}$ and effective current $\mathbf{I_E}$ as follows:

$$W_E = \mathrm{Re}(V_1 \times I_1^*) / 2$$
$$I_E = \sqrt{I_1 \times I_1^*} / \sqrt{2} \quad (3),$$

wherein $I_1^*$ is a complex conjugation of the drive current $\mathbf{I_1}$.

As above, based upon the primary drive voltage $\mathbf{V_1}$ and the primary drive current $\mathbf{I_1}$, the controller 50 of the present invention is adapted to calculate the impedance **Z** of the LCR induction-heater 20, the phase shift (argument) θ between the primary drive voltage $\mathbf{V_1}$ and the primary drive current $\mathbf{I_1}$, the effective electric power $\mathbf{W_E}$, and the effective current $\mathbf{I_E}$.

On the other hand, in a typical LCR circuit including the LCR induction-heater 20, parameters such as load resistance **R**, impedance **Z**, inductance **L**, and resonance frequency **Fr** of the heating coil 22 can be expressed as follows:

$$R = W_E / I_E^2$$
$$Z = R + j \times \left(\omega L - 1 / \omega C\right)$$
$$L = (R \tan\theta + 1 / \omega C) / \omega$$
$$Fr = 1 / 2\pi\sqrt{LC} \quad (4),$$

wherein ω is frequency **f** of the primary components (same as the drive frequency by definition, ω = **2πf**), and **C** is capacitance of the resonance capacitor 24, which are known. The controller 50 of the present invention is capable to further calculate the resonance frequency **Fr** and the load resistance **R** (= $\mathbf{R_C}$ + $\mathbf{R_L}$) based upon formula (4) with the phase θ calculated by formula (2).

Similarly, another approach may be used for calculation of the resonance frequency **Fr** as discussed herein. As above, the load resistance R and impedance **Z** are replicated as follows:

$$Z = V_1 / I_1$$
$$Z = R + j \times (\omega L - 1 / \omega C) \quad (5).$$

By modifying formula (5), the inductance **L** can be expressed as follows:

$$R = \mathrm{Re}(Z)$$
$$L = (\mathrm{Im}(Z) + 1 / \omega C) / \omega \quad (6).$$

Therefore, the controller 50 is capable to calculate the resonance frequency **Fr** based upon formula (7) with the inductance **L** calculated by formula (6) and the known capacitance **C** of the resonance capacitor 24.

$$Fr = 1/2\pi\sqrt{LC} \quad (7).$$

As will be discussed herein in detail, upon calculation of the resonance frequency **Fr** (or inductance **L** of the heating coil 22) and the load resistance **R** from the primary components of the drive voltage **V** and the drive current I, the controller 50 of the present invention is capable to instantly determine the standing situation of the heated body P (including whether or not the pan P stands over the heating coil) as well as the material of the heated body P, and to control whether the electric power should be supplied or halted to the LCR induction-heater 20.

Thus, the controller 50 of the present invention is adapted to calculate the resonance frequency **Fr** (or inductance **L** of the heating coil 22) and the load resistance **R**, from the primary components of the high-frequency modulated drive voltage **V** and drive current **I** detected within a single coil driving cycle as shown in Fig. 2 (within about 33 microseconds at the drive frequency of 30 kHz), so as to quickly determine whether to supply or shut off the electric power.

Here, detailed description will be made with some examples regarding how the controller 50 of the present invention determines or controls whether to supply or shut off the electric power upon calculation of the resonance frequency **Fr** and the load resistance **R**. Figs. 3A, 3B, and 3C are top plane views of the heating coil 22 and a plurality of disks 26 set over the heating coil. Four disks 26 are prepared which are made of iron, magnetic stainless, non-magnetic stainless, and aluminum. Each of disks 26 is regarded as a pseudo-pan. Diameters of the heating coil 22 and the disk 26 are about 180 mm and about 200 mm, respectively, and thickness of each disk 26 is about 1.5 mm.

In Fig. 3A, the disk 26 is set over a center (denoted as center O) of the heating coil 22, of which standing situation is referred to as "overlapping rate of 100 %". Also, in Figs. 3B, 3C, the disks 26 are set off the center so that the peripheral ends E thereof are positioned at 75 % and 50 % of the diameter of the heating coil 22, of which standing situations are referred to as "overlapping rate of 75 %" and "overlapping rate of 50 %", respectively. Thus, the standing situation with the overlapping rate of 50 % means the disk 26 having the peripheral end E of the disk 26 positioned on the center O of the heating coil 22.

After each of disks 26 made of iron, magnetic stainless, non-magnetic stainless, and aluminum is set over the heating coil 22 so that the overlapping rate is 100 %, 75 %, and 50 % (corresponding to Figs. 3A, 3B, and 3C, respectively), the resonance frequency **Fr** and the load resistance **R** are calculated from the primary components of the drive voltage **V** and the drive current **I** as explained above, and plotted on a map (chart) as shown in Fig. 4A. Also, when no disk is set over the heating coil 22 (thus, the standing situation with no load), the resonance frequency **Fr** and the load resistance **R** are calculated at a point marked by a double-circle in Figs. 4A, 4B.

In the present Example, for each of disks 26 made of different materials, the plotted points (**Fr**, **R**) having the overlapping rates of 100 %, 75 % and 50 % may be lined continuously, so as to define a "drive suppression region" having the overlapping rate of 50 % or less as shown by a hatching in Fig. 4B.

Therefore, when detecting the point of the resonance frequency **Fr** and the load resistance **R** falling within the predetermined drive suppression region having the overlapping rate of 50 % or less, the controller 50 of the present invention is operable to control the drive circuitry 14 not to supply the LCR induction-heater 20 with the electric power since it regards that the pan P is insufficiently set over the heating coil 22 or merely a small object stands thereon. Apparently, the threshold of the overlapping rate for determining suppression of the electric power supply is not limited to 50 % , which may be 40 % or less, or 60 % or less.

As above, the controller 50 of the present invention includes a memory storing the predetermined drive suppression region which prohibits supplying the LCR induction-heater 20 with the high-frequency current, and is adapted to control the drive circuitry 14 allowing the high-frequency current to the LCR induction-heater 20 only when the detected

parameters of the resonance frequency **Fr** and the load resistance **R** are outside of the drive suppression region. Also, the drive suppression region may be extended over a region of low load resistance **R** as shown in Fig. 4B not to heat the pan P made of aluminum. Thus, the drive suppression region may be arbitrarily adjusted or selected in accordance with its specification.

The controller 50 of the present invention is adapted to promptly calculate the resonance frequency **Fr** and the load resistance **R** from the primary components of the high-frequency modulated drive voltage **V** and drive current **I** detected within a single cycle (within about 33 microseconds at the drive frequency of 30 kHz), so as to prevent heating the small object that is not to be heated. This secures a safer system and save electric power by eliminating the undesired power consumption. In other words, according to the present invention, calculation of the resonance frequency **Fr** and the load resistance **R** contributes quick determinations of the material and the standing situation of the pan P (i.e., how much portion of the pan P is set over the heating coil 22) so as to facilitate heating the pan P under a heating condition optimized for the material and the standing situation of the pan P.

In the foregoing, the controller 50 is adapted to detect the resonance frequency **Fr** and the load resistance **R.** Alternatively, the controller 50 may be designed to calculate the inductance **L** of the heating coil 22 and the load resistance **R**, in order to control the drive circuitry 14. Figs. 5A and 5B are maps (charts) showing a relationship between the inductance **L** of the heating coil 22 and the load resistance **R** calculated from the primary components of the drive voltage **V** and the drive current **I**, which are similar to Figs. 4A and 4B. When no disk is set (i.e., the standing situation with no load), the inductance **L** and the load resistance **R** are obtained at a point marked by a double-circle in Figs. 5A, 5B.

The controller 50 is operable to control the drive circuitry 14 allowing the high-frequency current to the LCR induction-heater 20 only when the detected parameters of the inductance **L** and the load resistance **R** are outside of the drive suppression region (as shown by a hatching in Fig. 5B). The threshold of the overlapping rate for determining suppression of the electric power supply is may be set as 40 % or less. Also, the drive suppression region may be defined not to heat the pan P made of aluminum.

In general, it is well known that the pan P can be heated in the most efficient manner when the drive frequency is equal to the resonance frequency unique to the pan P. The controller 50 finds the resonance frequency **Fr**, so as to choose the drive frequency same as the resonance frequency **Fr**. Also, the drive frequency less than the resonance frequency **Fr** gives adverse effect on the switching elements such as IGBTs, therefore, if the resonance frequency **Fr** was not exactly identified in the conventional art, the drive frequency has often been chosen much higher than the actual resonance frequency.

Thus conventionally, the current is less than what could possibly be supplied to the heating coil, thus, the heating efficiency of the cooking system is substantially limited. However, the resonance frequency **Fr** of the pan P can be determined so that the controller 50 can choose the drive frequency optimized for the pan P to be heated efficiently.

<u>Example 2.</u>

Referring to Fig. 6, Example 2 of the induction-heating cooking system will be described herein. The induction-heating cooking system 2 of Example 2 is similar to one of Example 1 except that a capacitor voltage detector 34 is used for detecting the drive current through the LCR induction-heater 20, instead of the drive current detector 32 such as the current transformer. Therefore, the duplicated description in detail for the common features will be eliminated. Similar components are denoted with similar reference numerals throughout the description.

The induction-heating cooking system 2 of Example 2 includes a capacitor voltage detector 34 electrically connected with the primary-component extractor 40, for measuring a capacitance voltage $\mathbf{V_C}$ across the resonance capacitance 24. Similar to the drive voltage **V**, the capacitance voltage $\mathbf{V_C}$ contains multiple orders of capacitance voltage waveforms. Thus, the primary-component extractor 40 is operable to extract the primary component (or first order component having the frequency same as the drive frequency) of the capacitance voltage $\mathbf{V_C}$, by performing the discrete Fourier transformation with the sampled data of the capacitance voltage $\mathbf{V_C}$, which also can be expressed by a complex notation. There is a relationship between the primary component of the capacitance voltage $\mathbf{V_C}$, and the drive current **I**, as follows:

$$V_{C1} = I_1 / j\omega C$$
$$I_1 = j\omega C V_{C1} \qquad (8),$$

wherein ω is frequency **f** of the primary components (same as the drive frequency by definition, ω = **2πf**), and C is capacitance of the resonance capacitor 24, which are known. As apparently seen from formula (8), the drive current $\mathbf{I_1}$ has a phase advancing over the capacitance voltage $\mathbf{V_C}$ by **π/2**, i.e., 90°. Thus, as the capacitance voltage $\mathbf{V_C}$ is expressed by a complex notation, the primary component of the drive current $\mathbf{I_1}$ can be calculated quite easily, as follows:

$$V_{C1} = a + j \times b$$
$$I_1 = (-b + j \times a) \times \omega C \quad (9).$$

Based upon the drive current $\mathbf{I_1}$, the resonance frequency **Fr** (or the inductance **L** of the heating coil 22) and the load resistance **R** are calculated as Embodiment 1 so as to determine the pan material and the standing situation (including whether or not the pan P is set over the heating coil 22), thereby instantly controlling whether to supply or shut off the electric power to the LCR induction-heater 20. Also, since the relatively expensive current transformer of Embodiment 1 can be replaced with the capacitor voltage detector 34 for detecting the drive current at more reasonable cost according Example 2, the manufacturing cost of the induction-heating cooking systems can be reduced.

<u>Example 3.</u>

Referring to Fig. 6, Example 3 of the induction-heating cooking system will be described herein. In the conventional induction-heating cooking system, the current is gradually increased prior to practically heating the pan, for feed-back controlling and then the pan is actually heated under the optimal driving condition. Thus, the conventional induction-heating cooking system needs some time for feed-back controlling to find the optimal driving condition. In this context, when used in a particular cooking manner such as tossing the ingredients with the pan, the conventional induction-heating cooking system cannot keep the optimal driving condition due to the leaping load resistance **R** in accordance with the bouncing standing situation.

However, the capacitance **C** of the resonance capacitor 24 is known, and also each of the parameters including the inductance **L** of the heating coil 22 and the load resistance **R** can instantly be calculated as discussed in Embodiment 1 of present invention (see above formulas (4), (6), and (7)).

The controller can adjust the optimal waveform of the control signal to be applied to the drive circuitry. Fourier series expansion for the waveform of the control signal gives a percentage (duty ratio) of the optimal waveform of the first order of the drive voltage. Also, since the inductance **L**, the load resistance **R**, and the capacitance C of the LCR induction-heater 20 are known, the impedance ***Zl*** of the LCR induction-heater 20 is obtained as follows:

$$Zl = \sqrt{R^2 + \left(\omega L - \frac{1}{\omega C}\right)^2} \quad (10)$$

As mentioned above, the effective electric power **W** supplied to the pan is obtained from the effective drive current **I** and the load resistance **R**, therefore, the effective drive current **I** can be calculated for achieving the desired effective electric power **W**.

When the impedance ***Zl*** is so low that the drive current is beyond that can be supplied, the desired effective electric power **W** cannot be supplied to the pan. In this case, a step for reducing the supplied power is required.

With the impedance ***Zl*** obtained by above formula (10), the drive voltage can be calculated by multiplying the drive current **I** by the impedance ***Zl.*** The drive frequency can be chosen along with the resonance frequency **Fr** of the pan P, which is determined as discussed above.

The controller 50 can adjust the optimal waveform of the driving control signal applied to the drive circuitry 14. As will be described herein, the controller can determine the optimal waveform of the first order of the drive voltage by performing Fourier series expansion for the drive voltage. Thus, the effective value of the first order of the drive voltage can be determined in accordance with a duty ratio thereof for the half-bridge driver circuit, or with a phase width thereof for the full-bridge driver circuit so that the duty ratio or the phase width can promptly be determined for achieving the desired value of the first order of the drive voltage.

In case where the effective value of the first order of the drive voltage is greater than as can be supplied, it is unfeasible to control the drive circuitry with the control signal for achieving the desired electric power. Then, the controller tries another control signal of a greater drive frequency to recalculate the effective value of the primary component of the drive voltage. This allows instant determination of the drive voltage required for achieving the desired electric power, thereby to quickly increase the electric power up to the desired one, even in the feed-back controlling. Therefore, a user can enjoy prompt heating like a gas cooking system.

Therefore, according to Example 3, the induction-heating cooking system can calculate the resonance frequency **Fr**, the inductance **L**, and the load resistance **R** of the LCR induction-heater 20 in a very short time period (about 33 microseconds at the drive frequency of 30 kHz), therefore, the driving condition can be kept optimal regardless the

drastically varying load resistance **R** due to the bouncing standing situation even if used for tossing the ingredients with the pan. Example 4.

Referring to Fig. 7, Example 4 of the induction-heating cooking system will be described herein. The induction-heating cooking system 4 of Example 4 is similar to one of Example 1 except that it includes a plurality of heating coils 22 and the drive circuitry operable for individually driving each of the heating coils. Therefore, the duplicated description in detail for the common features will be eliminated. Similar components are denoted with similar reference numerals throughout the description.

Although not limited thereto, the induction-heating cooking system 4 of Embodiment 4 may include a central coil 28 and four of satellite coils 29a-29d. Each of the central coil 28 and the satellite coils 29a-29d is separately connected to the drive circuitry similar to one in Example 1.

Therefore, in the induction-heating cooking system 4 of Example 4, upon calculation of the resonance frequency **Fr** (or inductance **L** of the heating coil 22) and the load resistance **R** from the primary components of the drive voltage **V** and the drive current **I**, the controller 50 of Example 4 is capable to instantly determine the standing situation of the heated body P (including whether or not the pan P stands over each of the heating coils) as well as the material of the heated body P in a short period (about 33 microseconds at the drive frequency of 30 kHz), and to control whether the electric power should be supplied or halted to each of the heating coils 28, 29.

For example, when the pan P is small and stands only over the central coil 28, the controller 50 detects no pan P being set over the satellite coils 29a-29d and immediately halts supplying the electric power thereto, so as to minimize undesired power consumption. Also, when the pan P is set off the center of the central coil 28 and stands over the central coil 28 and the satellite coils 29a, 29d only, the controller 50 may avoid unnecessary power consumption by stopping the electric power to the satellite coils 29b, 29c.

Embodiment 5.

Next, Embodiment 5 of the induction-heating cooking system according to the present invention will be described herein. The induction-heating cooking system 5 of Embodiment 5 is similar to ones of Examples 1, 2 except that it includes an n-th order component extractor operable for extracting n-th order components of the drive voltage and the drive current. Therefore, the duplicated description in detail for the common features will be eliminated. Similar components are denoted with similar reference numerals throughout the description.

The n-th order component extractor of Embodiment 5 may be adapted to extract not only the first order but also n-th order components (wherein "n" is a natural number) of the drive voltage **V** and the drive current **I** detected by the drive voltage detector 30 and the drive current detector 32, each of which has the frequency substantially equal to n times of the drive frequency. The n-th order component extractor is operable to extract them, by sampling data of the drive voltage **V** and the drive current **I** at a sampling frequency equal to n times of the drive frequency, and performing the discrete Fourier transformation with the sampled data of the drive voltage **V** and the drive current **I**.

In general, when induction-heating the heated body P of aluminum, it is required to supply the heating coil with the high-frequency modulated current having frequency higher than as is required to induction-heating the heated body P of iron. So-called an "all-metal" induction-heating cooking system that is adapted to heat pans of any metal having such high electronic conductivity and magnetic permeability like aluminum has been proposed (by, e.g., Japanese Patent 3 460 997 B), and commercially available. The present invention can be incorporated to the "all-metal" induction-heating cooking system as well.

When heating the heated body P of aluminum with the drive current **I** of frequency equal to n times of the drive frequency, it is often controlled such that the primary component of the drive current is reduced and the n-th order component of the drive current **I** is increased. In case where the n-th order components (e.g. third components) of the drive current **I** and drive voltage **V** are greater than the primary component thereof, the n-th order component extractor of Embodiment 5 may select the n-th order components for instant calculation of the resonance frequency **Fr** and the load resistance **R**, in a similar manner as discussed above. In this example, this calculation with the n-th order components advantageously eliminates necessity to increase resolution of the A/D converter.

Although not illustrated in detail, a map (chart) can be obtained showing a relationship between the resonance frequency **Fr** and the load resistance **R** calculated from the n-th components of the drive voltage **V** and the drive current **I**, which is similar to Fig. 4A. Yet, the load resistance of the aluminum disk is greater than that of Fig. 4A as the resonance frequency thereof is higher. Thus, the controller 50 is operable to calculate the resonance frequency **Fr** (or inductance **L**) and the load resistance **R** from the n-th order components of the drive voltage **V** and the drive current **I**, and then to instantly determine whether the electric power should be supplied or halted to the LCR induction-heater 20 upon calculation of the resonance frequency **Fr** (or inductance **L**) and the load resistance **R**. Therefore, the induction-heating cooking system 5 of Embodiment 5 can detect the material and the overlapping rate of the heated body P over the heating coil 22, and halt supplying the heat coil 22 with electric power when those parameters fall within the drive suppression region.

Embodiment 6.

Referring to Fig. 8, Embodiment 6 of the induction-heating cooking system according to the present invention will be described herein. The induction-heating cooking system 6 of Embodiment 6 is similar to ones of the above examples and embodiments (especially Examples 1, 2) except that it includes a phase-shift corrector 42 for detecting a static phase shift (φ) between the drive voltage **V** and the drive current **I** detected by the drive voltage detector 30 and the drive current detector 32 (capacitor voltage detector 34), which is caused by those detectors 30, 32. Therefore, the duplicated description in detail for the common features will be eliminated. Similar components are denoted with similar reference numerals throughout the description.

Fig. 8 is a schematic circuit block diagram of an induction-heating cooking system 6 of Embodiment 6, in which the phase-shift corrector 42 is incorporated. As apparent for those skilled in the art, the phase-shift corrector 42 may be adapted in the induction-heating cooking system 2 of Example 2 as well. In the induction-heating cooking system 6 of Fig. 8, as stated above, the static phase shift (φ) may be caused by circuit configuration of the drive voltage detector 30 and the drive current detector 32, between the drive voltage **V** and the drive current **I** detected thereby. Such a static phase shift (φ) may possibly give adverse impact on calculation of the inductance **L**, the resonance frequency **Fr**, or the load resistance **R**, from the primary components of the drive voltage **V** and the drive current **I.** Thus, the phase-shift corrector 42 may preferably be provided for correcting the phase shift (φ).

In a non-loading situation where the pan P is not set over the heating coil, the LCR induction-heater 20 has the load resistance **R** that depends only upon the wiring resistance, and the inductance **L** that is equal to one of the heating coil 22 itself without being magnetic coupling with the pan P. The capacitance **C** of the resonance capacitor is fixed and known. Therefore, since those parameters of the LCR induction-heater 20 are known, the phase shift (θ) in the non-loading situation between the drive voltage **V** and the drive current **I** can theoretically be calculated.

Meanwhile, the actual phase shift between the drive voltage **V** and the drive current **I** can be calculated by the primary-component extractor 40, with the LCR induction-heater 20 supplied with the electric power in the non-loading situation. When the primary-component extractor 40 actually calculates the phase shift as (θ- (φ) in the non-loading situation, the static phase shift (φ) caused by circuit configuration of the drive voltage detector 30 and the drive current detector 32 can be identified. Thus, it is evaluated that the drive current **I** is detected by a delay time corresponding to the static phase shift (φ) from the actual phase shift. Therefore, the detected phase shift of the drive current **I** can be corrected by adding the static phase shift (φ) for approaching the actual or real phase shift.

More particularly, when shipping the induction-heating cooking system from a manufacturer thereof, the static phase shift (φ) is predetermined by supplying with the electric power in the non-loading situation as above, and memorized in a memory (not shown) of the phase-shift corrector 42. Then, when using the system at the user, the phase-shift corrector 42 is adapted to provide the controller 50 with the memorized phase shift (φ) so that the controller 50 calculates the parameters such as the resonance frequency **Fr** and the load resistance **R** with the corrected phase shift of the drive current **I** over the drive voltage **V**.

It should be noted that the corrected drive current **Ia** by adding the phase shift (φ) to the actually detected drive current **I** can be obtained by a complex coefficient C in a simple manner, as follows:

$$Ia = C \times I$$
$$C = \cos\phi + j\sin\phi \qquad (11).$$

Further, in case where the phase shift (φ) of the drive current **I** over the drive voltage **V** is dependent upon the drive frequency, it is preferable to obtain in advance, the phase shift (φ) for each of the drive frequency to be used, and to store them in the memory of the phase-shift corrector 42.

Therefore, according to Embodiment 6, the phase-shift corrector 42 is used for correcting the phase shift (φ) of the drive current **I** over the drive voltage **V**, and then the parameters such as the resonance frequency **Fr** and the load resistance **R** are calculated based upon the corrected or more precisely detected drive current **I** over the drive voltage **V**, so as to instantly determine the material and the standing situation of the pan P for heating it under the optimized driving condition.

Embodiment 7.

Referring to Fig. 9, Embodiment 7 of the induction-heating cooking system according to the present invention will be described herein. The induction-heating cooking system 7 of Embodiment 7 is similar to ones of the above examples and embodiments except that it is adapted to detect the electric power of the LCR induction-heater 20 from the primary components of the drive voltage **V** and the drive current **I** in a more effective and simpler manner. Therefore,

the duplicated description in detail for the common features will be eliminated. Similar components are denoted with similar reference numerals throughout the description.

In general, an electric power can be calculated by integrating the product of voltage and current of a commercial power source over a given time duration and by dividing it by the time duration, and in particular, the electric power consumed by the LCR induction-heater 20 is obtained as the product of the voltage across the rectifying circuitry 12 and the current output therefrom.

In case where the smoothing capacitor (not shown) composing the rectifying circuitry 12 has substantial capacitance so that the voltage **Vc** across the rectifying circuitry 12 (or the smoothing capacitor) can be regarded as a constant value and the current output therefrom can be treated as substantially direct current, the electric power consumed by the LCR induction-heater 20 should be calculated simply as the product of the voltage **Vc** across the rectifying circuitry 12 and the current **Ic** output therefrom, which are measured equally at any time.

However, in practice, the smoothing capacitor of great capacitance is required to rectify the voltage output from the rectifying circuitry 12 so as to have the direct or flat waveform, which undesirably increases reactive power and reduces power factor. In other words, when the load of the LCR induction-heater 20 is low, the voltage **Vc** across the rectifying circuitry 12 can be assumed as being constant, however, when the load of the LCR induction-heater 20 is substantial, the voltage **Vc** has the waveform like after being only full-wave rectified as illustrated in Fig. 9, which varies along with the commercial power supply. As the voltage **Vc** across the rectifying circuitry 12 varies, the output current **Ic** also varies as well, and thus, the electric power consumed by the LCR induction-heater 20 cannot be calculated any more as the product of the voltage **Vc** and the current **Ic.**

As the drive voltage **V** and the drive current **I** can be obtained, the effective electric power $\mathbf{W_E}$ can also be calculated by formula (3). Also, it would be possible to calculate an average of the effective electric power $\mathbf{W_E}$ over one cycle of drive frequency for the heating coil (referred to as a "coil driving cycle") as shown in Fig. 2, by summing up the effective electric power $\mathbf{W_E}$ for multiple coil driving cycles that cover one cycle of the commercial power supply (referred to as a "power supply cycle"). Although the drive voltage **V** varies along with the voltage **Vc** across the rectifying circuitry 12, the electric power consumed by the LCR induction-heater 20 could be precisely determined by continuous calculation of the effective electric power $\mathbf{W_E}$ for the multiple coil driving cycles within one power supply cycle.

Yet, suppose if the power supply cycle is 1/60 seconds (60Hz) and the coil driving cycle is 1/30000 seconds (30 kHz), a time corresponding to at least half of the power supply cycle (thus, 250 coil driving cycles) would be required to keep calculation of the effective electric power $\mathbf{W_E}$, thereby obtaining the average of the effective electric power $\mathbf{W_E}$ over one power supply cycle. However, a series of the calculation process demand continuously sampling data of the drive voltage **V** and the drive current **I** and A/D converting thereof, which eventually forces the CPU a big burden to retrieve and process enormous amount of data.

To address the issue, Embodiment 7 proposes detecting the averaged voltage and the peak voltage $\mathbf{V_P}$ of the voltage $\mathbf{V_C}$ across the rectifying circuitry 12 by use of any appropriate means, and detecting the effective electric power $\mathbf{W_C}$ during the coil driving cycle having the peak voltage $\mathbf{V_P}$. As mentioned above, since one of the coil driving cycles is relatively shorter than the power supply cycles, the effective electric power $\mathbf{W_E}$ can be assumed as unchanged regardless the fluctuating voltage $\mathbf{V_C}$.

The effective electric power $\mathbf{W_C}$ during the coil driving cycle is proportional to square of the peak voltage $\mathbf{V_P}$ and the averaged effective electric power is also proportional to square of the averaged voltage of the voltage $\mathbf{V_C}$, therefore, the coefficients between the effective electric powers and square of the voltages are the same each other despite the fluctuating voltage. That is, even where the voltage $\mathbf{V_C}$ across the rectifying circuitry 12 fluctuates during the power supply cycle as Fig. 9, the ratio of the effective electric power $\mathbf{W_C}$ over square of the voltage $\mathbf{V_P}$ during coil driving cycle is the same as one of averaged effective electric power over square of the voltage $\mathbf{V_C}$ during the power supply cycle.

Therefore, the controller 50 is designed to calculate the averaged effective electric power consumed by the rectifying circuitry 12 during the power supply cycle of the power supply as follows:

$$\begin{aligned}&\text{(Averaged Electric Power)}\\&= \text{(square of Averaged Voltage } \mathbf{V_C}) / \text{(square of Voltage } \mathbf{V_P})\\&\text{x (Electric Power } \mathbf{W_C}).\end{aligned}$$

When the rectifying circuitry 12 is operable to perform the full-wave rectification, the voltage $\mathbf{V_C}$ may be measured only for a half cycle rather than a full cycle of the commercial power supply. Therefore, according to Embodiment 7, the electric power of the LCR induction-heater 20 can be detected from the primary components of the drive voltage **V** and the drive current **I** in a more effective and simpler manner.

Embodiment 8.

Referring to Fig. 10, Embodiment 8 of the induction-heating cooking system according to the present invention will be described herein. The induction-heating cooking system 8 of Embodiment 8 is similar to ones of the above examples and embodiments except that it is adapted to use a lower sampling rate for sampling the data of the drive voltage **V** and the drive current **I**. Therefore, the duplicated description in detail for the common features will be eliminated. Similar components are denoted with similar reference numerals throughout the description.

As discussed above, in order to calculate the resonance frequency **Fr** (or the inductance **L**) and the load resistance **R**, the sampled data of the drive voltage **V** and the drive current **I** are required for one of the coil driving cycles. Typically, the drive voltage detector 30 and the drive current detector 32 are adapted to catch the sampled data of the drive voltage **V** and the drive current **I** at every moment (sampling point) divided by the sampling frequency, and to convert them to the digital data by the A/D converter for calculation of the resonance frequency **Fr** and the load resistance **R**.

When one of the coil driving cycles is time-divided to thirty two (32) sampling points, for one of the power supply cycles, the drive voltage **V** and the drive current **I** have to be sampled at 960,000 sampling points and converted into the digital data, based upon which the resonance frequency **Fr** and the load resistance **R** are calculated. However, such calculation process requires a high-speed A/D converter, but many of A/D converters built-in CPU operate at low speed. Thus, an external dedicated A/D converter may be incorporated for the high-speed A/D conversion, which raises a cost substantially.

For addressing this, Embodiment 8 of the present invention proposes an approach to collect sampled data of the drive voltage **V** and the drive current **I** at a lower sampling speed. In this embodiment, it is assumed that the waveforms of the drive voltage **V** and the drive current **I** remain unchanged in each of the power supply cycles. Typically, each of the coil driving cycles is time-divided at every sampling interval of "s" into a plurality (n) of sampling points (for example, five (5) sampling points in Fig. 10), n-sampled data of the drive voltage **V** and the drive current **I** are collected.

As shown by "(n + 1) sampling" in Fig. 10, the drive voltage detector 30 and the drive current detector 32 of Embodiment 8 collect sampled data of the drive voltage **V** and the drive current **I** at every sampling interval of {s·(n + 1)} with the sampling interval of "s" being the same, so as to cover data at every sampling interval of "s" of the waveform thereof across different coil driving cycles in an ascending order. Alternatively, as shown by "(n - 1) sampling" in Fig. 10, the drive voltage detector 30 and the drive current detector 32 of Embodiment 8 collect sampled data of the drive voltage **V** and the drive current **I** at every sampling interval of {s·(n - 1)} with the sampling interval of "s" being the same, so as to cover data at every sampling interval of "s" of the waveform thereof across different coil driving cycles in an descending order. As assumed that the waveforms of the drive voltage **V** and the drive current **I** remain unchanged in each of the power supply cycles, a complete set of n-sampled data of the drive voltage **V** and the drive current **I** for a single waveform thereof can be obtained by collecting the sampled data more or less n times across different coil driving cycles.

As discussed in Embodiment 7, the drive voltage **V** and the drive current **I** may also fluctuate in multiple coil driving cycles along with the varying voltage **Vc** across the rectifying circuitry 12, but relatively stable or constant in several coil driving cycles having the peak voltage $\mathbf{V_P}$, therefore, such low-speed sampled data of the drive voltage **V** and the drive current **I** are preferably collected when the voltage **Vc** across the rectifying circuitry 12 is relatively constant. Alternatively, after revising the drive voltage **V** and the drive current **I** with the varying voltage **Vc**, a complete set of sampled data thereof across a single coil driving cycle may be obtained.

Embodiment 9.

With reference of Figs. 11-14, Embodiment 9 of the induction-heating cooking system according to the present invention will be described herein. The induction-heating cooking system 9 of Embodiment 9 is similar to ones of the above examples and embodiments, and in particular, it is described in detail how desired electric power is instantly determined in accordance with the resonance frequency **Fr** and the load resistance **R** of the heated body P. Therefore, the duplicated description in detail for the common features will be eliminated. Similar components are denoted with similar reference numerals throughout the description.

As stated in the above examples and embodiments, the primary-component extractor 40 of the present invention is used to detect the resonance frequency **Fr** (or the inductance **L**) and the load resistance **R** of the heated body P. When the desired electric power **W** is selected by a user, the current **I** for achieving the desired electric power **W** is obtained as follows:

$$I = \sqrt{W/R} \qquad (12).$$

Also, using the drive frequency **f**, the angular speed ω (= **2πf**), the inductance **L** of the LCR induction-heater 20, the resonance frequency **Fr**, and the capacitance **C** of the resonance capacitor 24, the impedance **Z** is expressed as follows:

$$Z = \sqrt{R^2 + \left(\omega L - 1/\omega C\right)^2} \quad (13)$$

Thus the voltage **V** for the current **I** through the impedance **Z** for achieving the desired electric power **W** is expressed as follows:

$$V = Z \cdot I \quad (14).$$

Firstly, description will be made herein for the drive circuitry 14 that is composed by a full-bridge driver circuit. Fig. 11 shows a waveform of a primary component of a driving control signal for one cycle, used for controlling the full-bridge driver circuit. In general, the electric power of the LCR induction-heater 20 can be controlled by adjusting a phase width **a** shown in Fig. 11. Meanwhile, this waveform of the driving control signal can be expressed with the Fourier series expansion v(x) as follows:

$$v(x) = V \cdot \frac{4}{\pi} \sum_{m=0}^{\infty} \frac{(-1)^m}{2m+1} \cdot \sin\left((2m+1) \cdot \frac{a}{2}\right) \cdot \sin((2m+1)x) \quad (15),$$

wherein 0 < **a <** π, and the first order of v(x) has a coefficient c1 that can be expressed as follows:

$$c1(a) = V \cdot \frac{4}{\pi} \cdot \sin\left(\frac{a}{2}\right) \quad (16).$$

Fig. 12 is a chart showing a relationship between the phase width **a** and the first order coefficient c1(**a**). Then, the voltage **Vd** for achieving the desired electric power **W** is determined, the phase width **a** can be obtained as follows:

$$Vd = V \cdot \frac{4}{\pi} \cdot \sin\left(\frac{a}{2}\right)$$
$$a = 2\arcsin\left(\frac{\pi}{4} \cdot \frac{Vd}{V}\right) \quad (17).$$

As above, according to the present invention, once the voltage **Vd** for achieving the desired electric power **W** is set, the controller 50 is operable in cooperation with the primary-component extractor 40, to instantly determine the waveform of the driving control signal having the phase width a for achieving the desired electric power **W**.

Next, description will be made herein for the drive circuitry 14 that is formed with a half-bridge driver circuit. Fig. 13 shows a waveform of a primary component of a driving control signal for one cycle, used for controlling the half-bridge driver circuit. The electric power of the LCR induction-heater 20 can generally be controlled by adjusting a phase width **a** shown in Fig. 13. Also, this waveform of the driving control signal can be expressed with the Fourier series expansion v(x) as follows:

$$v(x) = V \cdot \frac{a}{2\pi} + V \cdot \frac{2}{n\pi} \sum_{n=1}^{\infty} \sin\left(n \cdot \frac{a}{2}\right) \cdot \cos(nx) \quad (18),$$

wherein 0 < **a** < π, and the first order of v(x) has a coefficient c1 that can be expressed as follows:

$$c1(a) = V \cdot \frac{2}{\pi} \cdot \sin\left(\frac{a}{2}\right) \qquad (19).$$

Fig. 14 is a chart showing a relationship between the phase width **a** and the first order coefficient c1**(a)**. The phase width **a** is often referred to as a duty ratio **d** (%), which can be obtained as follows:

$$d = \frac{a}{2\pi} \times 100 \quad (\%) \qquad (20).$$

Then, the voltage **Vd** for achieving the desired electric power **W** is set, the phase width **a** can be obtained as follows:

$$Vd = V \cdot \frac{2}{\pi} \cdot \sin\left(\frac{a}{2}\right)$$
$$a = 2\arcsin\left(\frac{\pi}{2} \cdot \frac{Vd}{V}\right) \qquad (21).$$

By substituting the phase width **a** in formula (20), the duty ratio **d** can be calculated. Therefore, with use of the half-bridge driver circuit as well, the controller 50 is operable in cooperation with the primary-component extractor 40, to instantly determine the waveform of the driving control signal having the phase width **a** for achieving the desired electric power **W.** It should be noted that as seen apparent from Fig. 14, the duty ratio **d** is controlled to be less than 50 % since the voltage is the maximum at the duty ratio **d** of 50 %.

As described above, when the primary-component extractor 40 of the present invention is used to detect the resonance frequency **Fr** and the load resistance **R** of the heated body P, the drive voltage **V** and the drive current **I** are required to be sampled during at least one of the coil driving cycles. Although not shown in detail, the A/D converter of the primary-component extractor 40 preferably samples data thereof at the sampling frequency equal to n times (n is an integer of 2 or more) of the drive frequency (clock frequency).

Alternatively, the A/D converter has the sampling frequency equal to 1/n times (n is an integer of 2 or more) of the drive frequency (clock frequency). In either case, the clock oscillating source is preferably shared both by the drive frequency (clock frequency) and the sampling frequency of the A/D converter.

<u>Denotation of Reference Numerals</u>

| | |
|---|---|
| 1-4 | induction-heating cooking system, |
| 10 | commercial power supply |
| 12 | rectifying circuitry |
| 14 | drive circuitry |
| 20 | LCR induction-heater |
| 22 | heating coil |
| 24 | resonance capacitor |
| 26 | disk (pseudo-pan) |
| 28 | central coil |
| 29 | satellite coil |
| 30 | drive voltage detector |
| 32 | drive current detector |
| 34 | capacitor voltage detector |
| 40 | primary-component extractor |
| 42 | phase-shift corrector |

50 controller

## Claims

1. A method for operating an LCR induction-heater (20) having a heating coil (22) and a resonance capacitor (24) connected in series with each other, the method comprising the following steps:

- supplying a high-frequency current of a given drive frequency to the heating coil (22);
- detecting a drive voltage (**V**) across said LCR induction-heater (20); and
- detecting a drive current (**I**) through said LCR induction-heater (20); **characterized by**
- extracting an n-th order drive voltage, n being a natural number, composing an n-th component of the detected drive voltage (V) therefrom, the n-th order drive voltage having a frequency equal to n times of the drive frequency;
- extracting an n-th order drive current composing an n-th component of the detected drive current (**I**) therefrom, the n-th order drive current having a frequency equal to n times of the drive frequency;
- calculating a set of a resonance frequency (**Fr**) and a load resistance (**R**) or a set of an inductance (**L**) and the load resistance (**R**) of the induction heater (20) based upon the n-th order drive voltage and the n-th order drive current; and
- determining whether an electric power is to be supplied or halted to the LCR induction-heater (20) in accordance with the set of the calculated resonance frequency (**Fr**) and the calculated load resistance (**R**) or the set of the calculated inductance (**L**) and the calculated load resistance (**R**).

2. The method according to claim 1,
wherein the step of extracting the n-th order drive current includes:

- detecting a capacitor voltage across the resonance capacitor (24),
- extracting an n-th order capacitor voltage composing an n-th order component of the capacitor voltage therefrom, the n-th order capacitor voltage having a frequency equal to n times of the drive frequency, and
- calculating the n-th order drive current through the LCR induction-heater (20) from the n-th order capacitor voltage, the n-th order drive current having a frequency equal to n times of the drive frequency.

3. The method according to claim 1 or 2,
wherein the primary-th order drive voltage and the n-th order drive current are extracted in a time period corresponding to a single cycle of the drive frequency.

4. The method according to claim 1 or 2,
further comprising:

- memorizing a chart showing a relationship between the resonance frequency (**Fr**) and the load resistance (**R**), or between the inductance (**L**) and the load resistance (**R**), together with a drive suppression region in the chart where the electric power is to be halted to the LCR induction-heater (20); and
- controlling to halt the electric power to said LCR induction-heater (20) when a set of the resonance frequency (**Fr**) and the load resistance (**R**) or a set of the inductance (**L**) and the load resistance (**R**) is within the drive suppression region in the chart.

5. The method according to claim 1 or 2,
further comprising:

- providing a plurality of the LCR induction-heaters (20), each having a heating coil (22) and a resonance capacitor (24) connected in series with each other; and - supplying a high-frequency current of a given frequency to each of the heating coils (22).

6. The method according to claim 1 or 2,
further comprising:

- detecting a phase shift of the drive current (**I**) over the drive voltage (**V**); and
- correcting the phase of the drive current (**I**) based upon the phase shift.

**7.** The method according to claim 1 or 2, further comprising:

- rectifying an alternating voltage from a commercial power source to a direct voltage;
- detecting an average of a voltage (**$V_C$**) output from the rectifying circuitry and a peak voltage (**$V_P$**) thereof; and
- calculating an effective electric power (**$W_C$**) based upon the n-th order drive voltage and the n-th order drive current as well as an averaged electric power consumed by said rectifying circuitry as expressed below:

$$\text{(Averaged Electric Power)} = \text{(square of Averaged Voltage } V_C\text{) / (square of Voltage } V_P\text{)} \times \text{(Electric Power } W_C\text{)}.$$

**8.** The method according to claim 1 or 2, further comprising:

collecting data of the drive voltage (**V**) and the drive current (**I**) at plurality of sampling intervals (s) in a single coil driving cycle, by collecting data thereof at every sampling interval of {s·(n + 1)} or {s·(n - 1)} across different coil driving cycles, wherein n is a natural number of 2 or more.

**9.** The method according to claim 1 or 2, further comprising:

- calculating the drive current required for desired electric power consumed by the LCR induction-heater (20), based upon the calculated resonance frequency (**Fr**) the calculated load resistance (**R**), and the calculated impedance (***Zl***) of the LCR induction-heater (20),
- calculating a duty ratio of a control signal waveform of the drive circuitry for achieving the desired drive current, based upon a phase width of the Fourier series expansion of the control signal; and
- controlling the drive circuitry with the control signal having the calculated duty ratio.

## Patentansprüche

**1.** Verfahren zum Betreiben einer LCR-Induktionsheizung (20) mit einer Heizspule (22) und einem Resonanzkondensator (24), die in Reihe miteinander verbunden sind, wobei das Verfahren die folgenden Schritte aufweist:

- Zuführen eines Hochfrequenzstroms mit einer vorgegebenen Antriebsfrequenz zu der Heizspule (22);
- Detektieren einer Antriebsspannung (**V**) über der LCR-Induktionsheizung (20); und
- Detektieren eines Antriebsstroms (**I**) durch die LCR-Induktionsheizung (20);

**<u>gekennzeichnet durch</u>**

- Extrahieren einer Antriebsspannung n-ter Ordnung, wobei n eine natürliche Zahl ist, Bilden einer n-ten Komponente der detektierten Antriebsspannung (**V**) daraus, wobei die Antriebsspannung n-ter Ordnung eine Frequenz hat, die gleich dem n-Fachen der Antriebsfrequenz ist;
- Extrahieren eines Antriebsstroms n-ter Ordnung, Bilden einer n-ten Komponente des detektierten Antriebsstroms (**I**) daraus, wobei der Antriebsstrom n-ter Ordnung eine Frequenz hat, die gleich dem n-Fachen der Antriebsfrequenz ist;
- Berechnen eines Satzes von einer Resonanzfrequenz (**Fr**) und einem Lastwiderstand (**R**) oder eines Satzes von einer Induktivität (**L**) und einem Lastwiderstandes (**R**) der Induktionsheizung (20) auf der Basis von der Antriebsspannung n-ter Ordnung und dem Antriebsstrom n-ter Ordnung; und
- Bestimmen, ob der LCR-Induktionsheizung (20) ein elektrischer Strom zuzuführen oder anzuhalten ist, und zwar gemäß dem Satz von der berechneten Resonanzfrequenz (**Fr**) und dem berechneten Lastwiderstand (**R**) oder dem Satz von der berechneten Induktivität (**L**) und dem berechneten Lastwiderstand (**R**).

**2.** Verfahren nach Anspruch 1, wobei der Schritt des Extrahierens des Antriebsstroms n-ter Ordnung Folgendes aufweist:

- Detektieren einer Kondensatorspannung über dem Resonanzkondensator (24),
- Extrahieren einer Kondensatorspannung n-ter Ordnung, Bilden einer Komponente n-ter Ordnung der Kondensatorspannung daraus, wobei die Kondensatorspannung n-ter Ordnung eine Frequenz hat, die gleich dem n-Fachen der Antriebsfrequenz ist, und
- Berechnen des Antriebsstroms n-ter Ordnung durch die LCR-Induktionsheizung (20) aus der Kondensatorspannung n-ter Ordnung, wobei der Antriebsstrom n-ter Ordnung eine Frequenz hat, die gleich dem n-Fachen der Antriebsfrequenz ist.

**3.** Verfahren nach Anspruch 1 oder 2, wobei die Antriebsspannung erster Ordnung und der Antriebsstrom n-ter Ordnung in einem Zeitraum extrahiert werden, der einem einzigen Zyklus der Antriebsfrequenz entspricht.

**4.** Verfahren nach Anspruch 1 oder 2, das weiterhin Folgendes aufweist:

- Speichern einer Darstellung, die eine Relation zwischen der Resonanzfrequenz (**Fr**) und dem Lastwiderstand (**R**) oder zwischen der Induktivität (**L**) und dem Lastwiderstandes (**R**) zeigt, zusammen mit einem Antriebsunterdrückungsbereich in der Darstellung, in dem der elektrische Strom zu der LCR-Induktionsheizung (20) unterbrochen werden soll; und
- Steuern des Unterbrechens des elektrischen Stroms zu der LCR-Induktionsheizung (20), wenn ein Satz von der Resonanzfrequenz (**Fr**) und dem Lastwiderstand (**R**) oder ein Satz von der Induktivität (**L**) und dem Lastwiderstand (**R**) innerhalb von dem Antriebsunterdrückungsbereich in der Darstellung liegt.

**5.** Verfahren nach Anspruch 1 oder 2, das weiterhin Folgendes aufweist:

- Vorsehen einer Vielzahl von LCR-Induktionsheizungen (20), jeweils mit einer Heizspule (22) und einem Resonanzkondensator (24), die miteinander in Reihe verbunden sind; und
- Zuführen eines Hochfrequenzstroms mit einer vorgegebenen Frequenz zu jeder der Heizspulen (22).

**6.** Verfahren nach Anspruch 1 oder 2, das weiterhin Folgendes aufweist:

- Detektieren einer Phasenverschiebung des Antriebsstroms (**I**) gegenüber der Antriebsspannung (**V**); und
- Korrigieren der Phase des Antriebsstroms (**I**) auf der Basis der Phasenverschiebung.

**7.** Verfahren nach Anspruch 1 oder 2, das weiterhin Folgendes aufweist:

- Gleichrichten einer Wechselspannung von einer handelsüblichen Stromquelle in eine Gleichspannung;
- Detektieren eines Durchschnitts einer Spannung($\mathbf{V_c}$), die von der Gleichrichtungsschaltung abgegeben wird, sowie einer Peak-Spannung ($\mathbf{V_P}$) davon; und
- Berechnen einer effektiven elektrischen Leistung ($\mathbf{W_C}$) auf der Basis von der Antriebsspannung n-ter Ordnung und dem Antriebsstrom n-ter Ordnung sowie einem gemittelten elektrischen Strom, der von der Gleichrichtungsschaltung verbraucht wird, wie nachstehend angegeben:

$$\begin{aligned}&(\text{gemittelter elektrischer Strom})\\&= (\text{Quadrat der gemittelten Spannung } \mathbf{V_C}) / (\text{Quadrat der Spannung } \mathbf{V_P})\\&\quad \text{x } (\text{elektrische Leistung } \mathbf{W_C}).\end{aligned}$$

**8.** Verfahren nach Anspruch 1 oder 2,

das weiterhin Folgendes aufweist:

Sammeln von Daten der Antriebsspannung (**V**) und des Antriebsstroms (**I**) in einer Vielzahl von Abtastintervallen (s) in einem einzigen Spulenantriebszyklus durch Sammeln von Daten von diesen in jedem Abtastinterval von {s·(n + 1)} oder {s·(n - 1)} über verschiedene Spulenantriebszyklen, wobei n eine natürliche Zahl von 2 oder mehr ist.

**9.** Verfahren nach Anspruch 1 oder 2, das weiterhin Folgendes aufweist:

- Berechnen des Antriebsstroms, der für die gewünschte elektrische Leistung erforderlich ist, die von dem LCR-Induktionsheizung (20) verbraucht wird, und zwar auf der Basis von der berechneten Resonanzfrequenz (**Fr**), dem berechneten Lastwiderstand (**R**) und der berechneten Impedanz (***ZI***) der LCR-Induktionsheizung (20),
- Berechnen eines Tastverhältnisses einer Steuersignalwellenform der Antriebsschaltung zum Erreichen des gewünschten Antriebsstroms auf der Basis einer Phasenbreite der Fourierreihenentwicklung des Steuersignals;
- Steuern der Antriebsschaltung mit dem Steuersignal mit dem berechneten Tastverhältnis.

**Revendications**

**1.** Procédé pour le fonctionnement d'un dispositif chauffant à induction de type LCR (20) ayant une bobine chauffante (22) et une capacité de résonance (24) connecté en série l'une avec l'autre, le procédé comprenant les étapes suivantes consistant à:

alimenter un courant à haute fréquence avec une fréquence pilote donnée à la bobine chauffante (22);
détecter un voltage pilote (V) aux bornes dudit dispositif chauffant à induction de type LCR (20); et
- détecter un courant pilote (I) à travers ledit dispositif chauffant à induction de type LCR (20);

**<u>caractérisé</u> par** les étapes consistant à:

- extraire un voltage pilote du n-ième ordre, n étant un nombre naturel, composé d'une n-ième composante du voltage pilote détecté (V) à partir de celui-ci, le voltage pilote de n-ième ordre ayant une fréquence égale à n fois la fréquence pilote;
- extraire un courant pilote de n-ième ordre composant une n-ième composante du courant pilote détecté (I) à partir de celui-ci, le courant pilote de n-ième ordre ayant une fréquence égale à n fois la fréquence pilote;
- calculer un jeu d'une fréquence de résonance (Fr) et d'une résistance de charge (R), ou bien un jeu d'une inductance (L) et de la résistance de charge (R) du dispositif chauffant à induction (20) sur la base du voltage pilote de n-ième ordre et du courant pilote de n-ième ordre; et
- déterminer si une puissance électrique doit être alimentée ou maintenue vers le dispositif de chauffant à induction de type LCR (20) en accord avec le jeu de la fréquence de résonance calculée (Fr) et de la résistance de charge calculée (R), ou avec le jeu de l'inductance calculée (L) et de la résistance de charge calculée (R).

**2.** Procédé selon la revendication 1, dans lequel l'étape consistant à extraire le courant pilote de n-ième ordre inclut les étapes consistant à:

- détecter un voltage de capacité aux bornes de la capacité de résonance (24);
- extraire un voltage de capacité de n-ième ordre composant une composante de n-ième ordre du voltage de capacité à partir de celui-ci, le voltage de capacité de n-ième ordre ayant une fréquence égale à n fois la fréquence pilote, et
- calculer le courant pilote de n-ième ordre traversant le dispositif chauffant à induction de type LCR (20) à partir du voltage de capacité de n-ième ordre, le courant pilote de n-ième ordre ayant une fréquence égale à n fois la fréquence pilote.

**3.** Procédé selon la revendication 1 ou 2, dans lequel le voltage pilote d'ordre primaire et le courant pilote de n-ième ordre sont extraits dans une période temporelle correspondant à un cycle unique de la fréquence pilote.

**4.** Procédé selon la revendication 1 ou 2,

comprenant en outre les étapes consistant à:

- mémoriser une carte présentant une relation entre la fréquence de résonance (Fr) et la résistance de charge (R), ou entre l'inductance (L) et la résistance de charge (R), ensemble avec une région de suppression pilote dans la carte dans laquelle la puissance électrique vers le dispositif de chauffage à induction de type LCR (20) doit être maintenue; et
- commander le maintien de la puissance électrique audit dispositif de chauffage par induction de type LCR (20) quand un jeu de la fréquence de résonance (Fr) et de la résistance de charge (R) ou un jeu de l'inductance (L) et de la résistance de charge (R) tombe dans la région de suppression pilote dans la carte.

**5.** Procédé selon la revendication 1 ou 2,
comprenant en outre les étapes consistant à:

- fournir une pluralité de dispositifs chauffants à induction de type LCR (20) ayant chacun une bobine chauffante (22) et une capacité de résonance (24) connectées en série l'une avec l'autre; et
- alimenter un courant à haute fréquence avec une fréquence donnée à chacune des bobines chauffantes (22).

**6.** Procédé selon la revendication 1 ou 2,
comprenant en outre les étapes consistant à:

- détecter un décalage de phase du courant pilote (I) par rapport au voltage pilote (V); et
- corriger la phase du courant pilote (**I**) sur la base du décalage de phase.

**7.** Procédé selon la revendication 1 ou 2,
comprenant en outre les étapes consistant à:

- rectifier un voltage alternatif provenant d'une source de puissance commerciale en un voltage à courant continu;
- détecter une moyenne d'un voltage (VC) délivré par le circuit de rectification et un voltage de pointe (VP) de celui-ci; et
- calculer une puissance électrique effective (WC) sur la base du voltage pilote de n-ième ordre et du courant pilote de n-ième ordre ainsi qu'une puissance électrique moyenne consommée par ledit circuit de rectification, de la façon exprimée ci-dessous:

(puissance électrique moyenne)
= (carré du voltage moyen $V_C$)/(carré du voltage $V_P$) x (puissance électrique $W_C$).

**8.** Procédé selon la revendication 1 ou 2,
comprenant en outre l'étape consistant à recueillir des données du voltage pilote (V) et du courant pilote (I) a une pluralité d'intervalles d'échantillonnage (s) dans un unique cycle de pilotage de bobine, en recueillant des données de celui-ci à chaque intervalle d'échantillonnage de {s·(n+1)} ou {s·(n-1)} sur différents cycles de pilotage de bobine, dans lesquels n est un nombre naturel égal à 2 ou plus.

**9.** Procédé selon la revendication 1 ou 2,
comprenant en outre les étapes consistant à:

- calculer le courant pilote requis pour une puissance électrique désirée consommée par le dispositif chauffant à induction de type LCR (20), sur la base de la fréquence de résonance calculée (Fr), de la résistance de charge calculée (R), et de l'impédance calculée (Z 1) du dispositif chauffant par induction de type LCR (20),
- calculer un rapport de service d'une forme d'onde du signal de commande du circuit de pilotage pour atteindre le courant pilote désiré, sur la base d'une largeur de phase de l'expansion de la série de Fourier du signal de commande; et
- commander le circuit pilote avec le signal de commande ayant le rapport de service calculé.

Fig.1

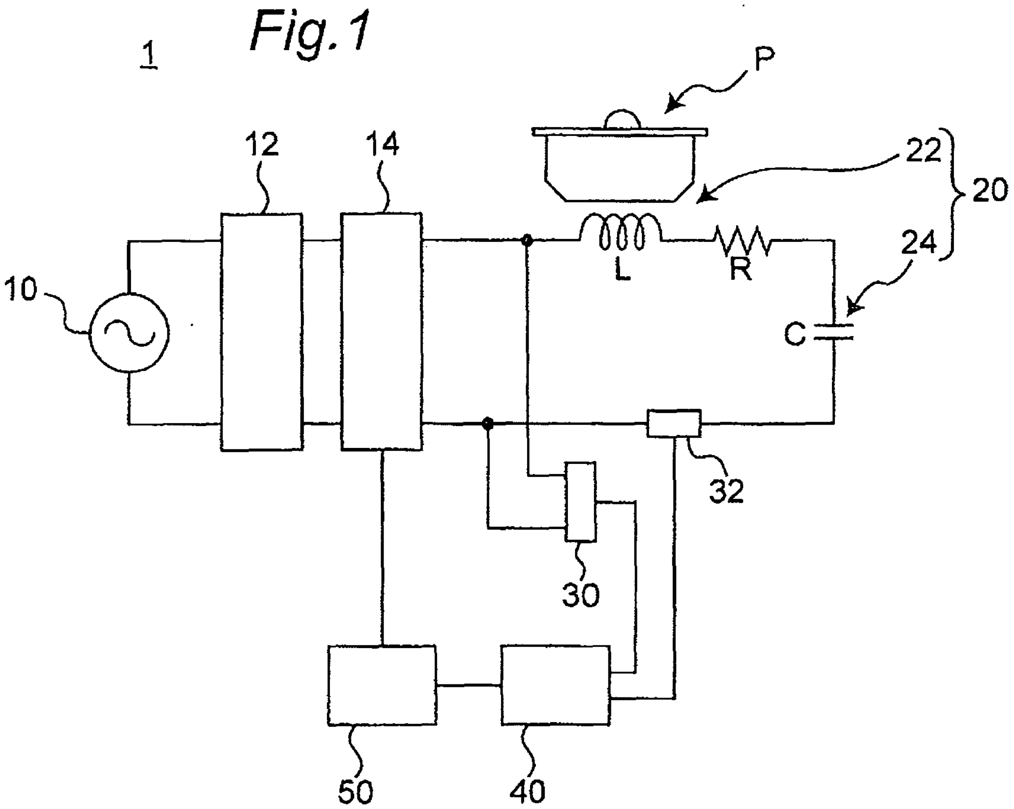
1
P
12
14
22
20
24
10
L
R
C
32
30
50
40

Fig.2

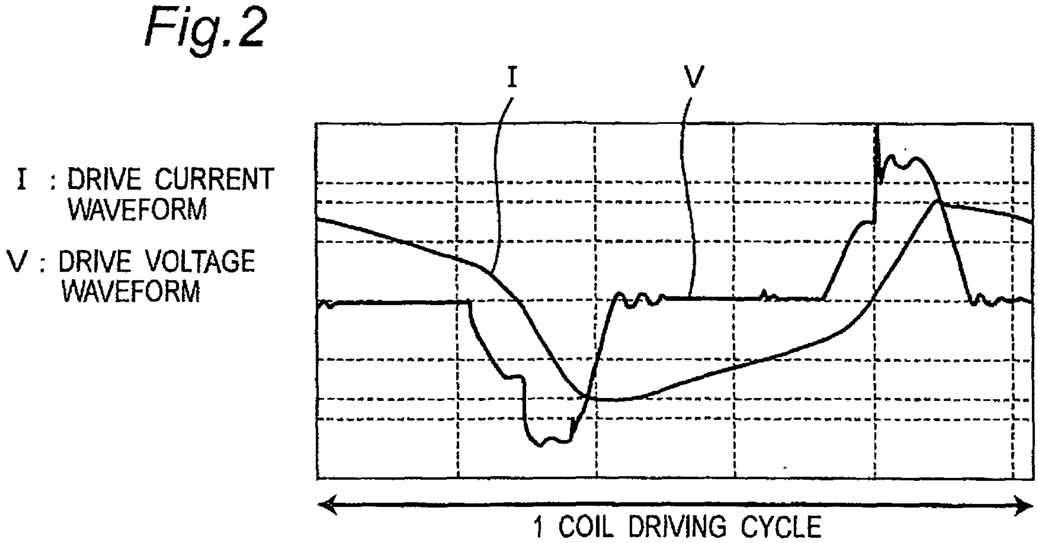
I
V
I : DRIVE CURRENT WAVEFORM
V : DRIVE VOLTAGE WAVEFORM
1 COIL DRIVING CYCLE

*Fig.3A*

OVERLAPPING
RATE OF 100%

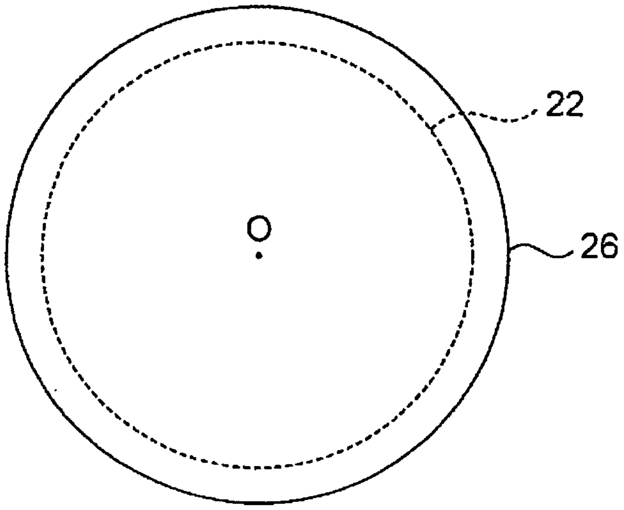


*Fig.3B*

OVERLAPPING
RATE OF 75%

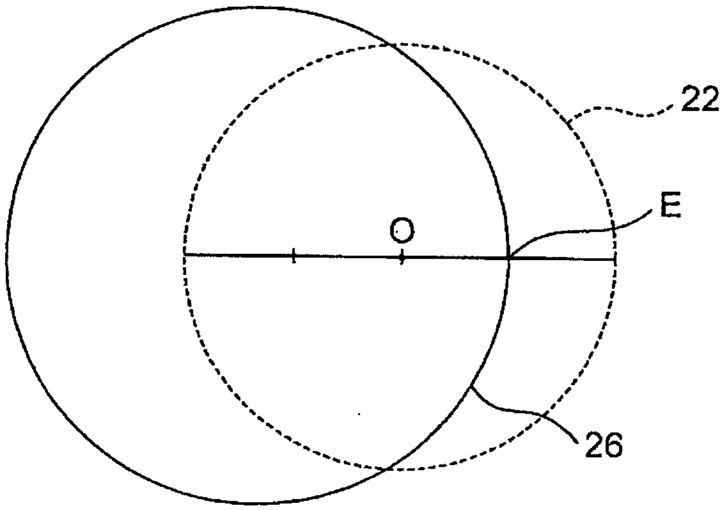


*Fig.3C*

OVERLAPPING
RATE OF 50%

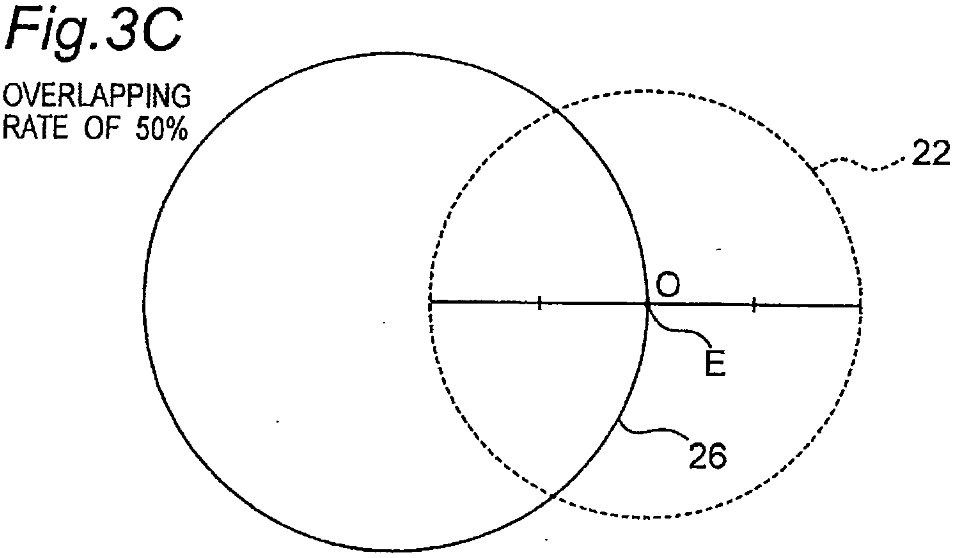

*Fig.4A*

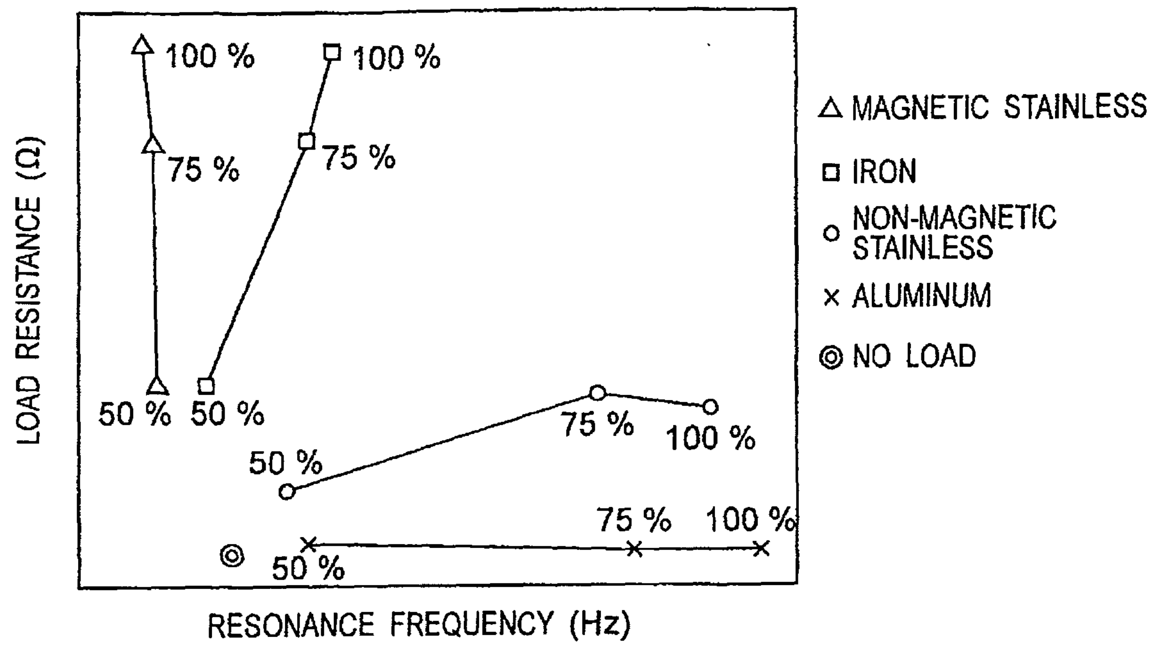
100 %
100 %
75 %
75 %
50 %
50 %
50 %
75 %
100 %
75 %
100 %
50 %
LOAD RESISTANCE (Ω)
RESONANCE FREQUENCY (Hz)
△ MAGNETIC STAINLESS
□ IRON
○ NON-MAGNETIC STAINLESS
× ALUMINUM
◎ NO LOAD

*Fig.4B*

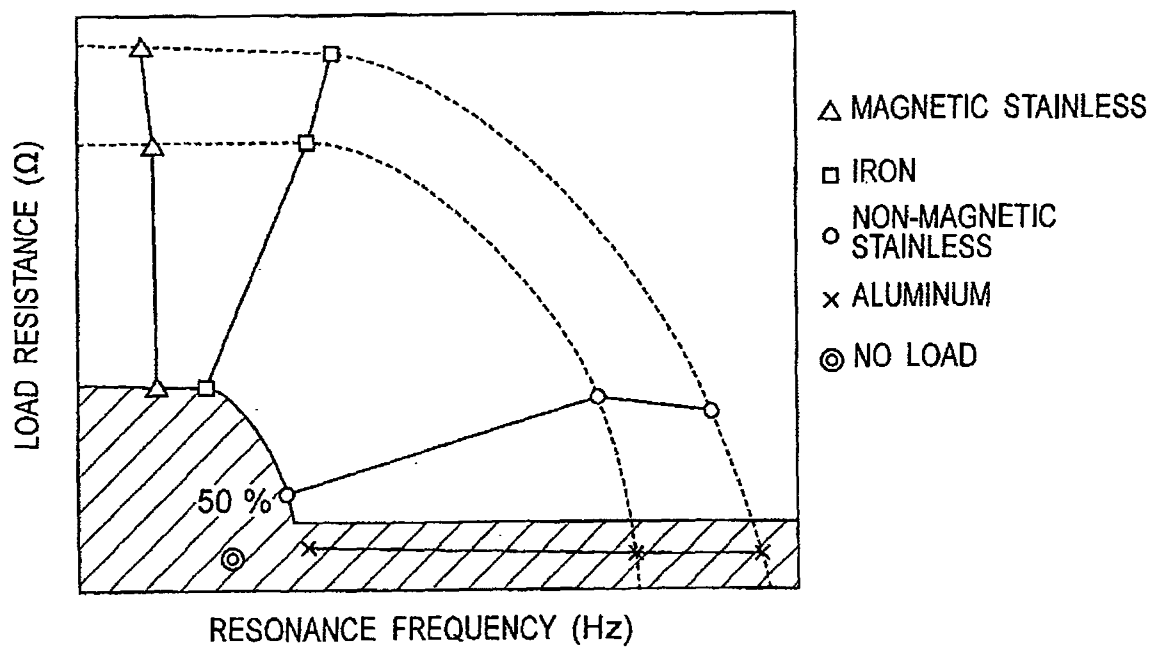
50 %
LOAD RESISTANCE (Ω)
RESONANCE FREQUENCY (Hz)
△ MAGNETIC STAINLESS
□ IRON
○ NON-MAGNETIC STAINLESS
× ALUMINUM
◎ NO LOAD

Fig.5A

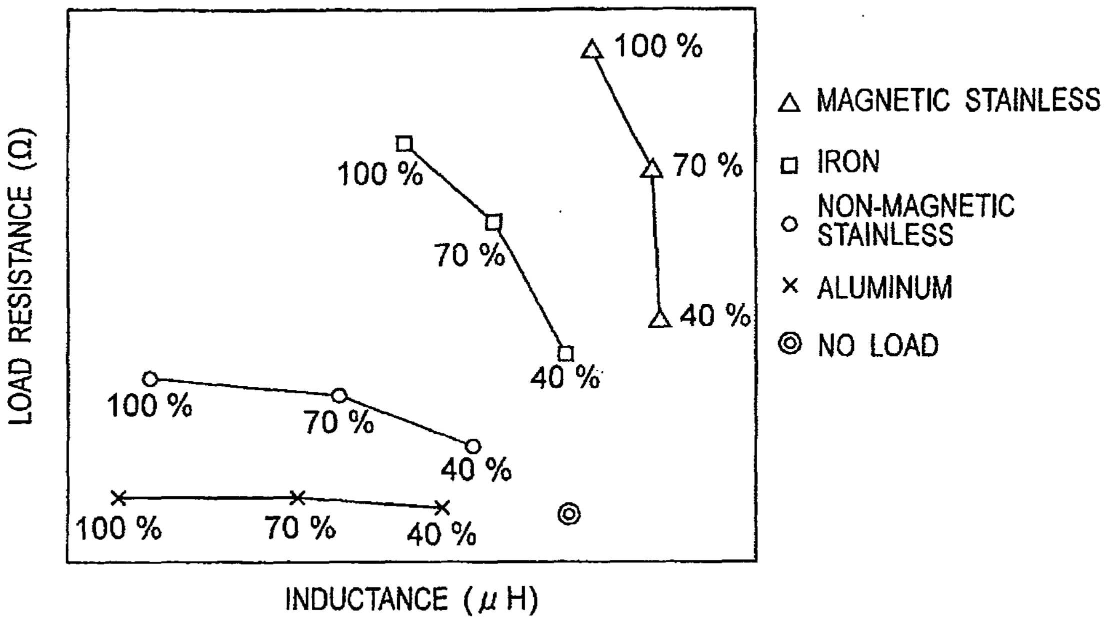
100 %
70 %
100 %
70 %
40 %
40 %
100 %
70 %
40 %
100 %
70 %
40 %
LOAD RESISTANCE (Ω)
INDUCTANCE (μH)
△ MAGNETIC STAINLESS
□ IRON
○ NON-MAGNETIC STAINLESS
× ALUMINUM
◎ NO LOAD

Fig.5B

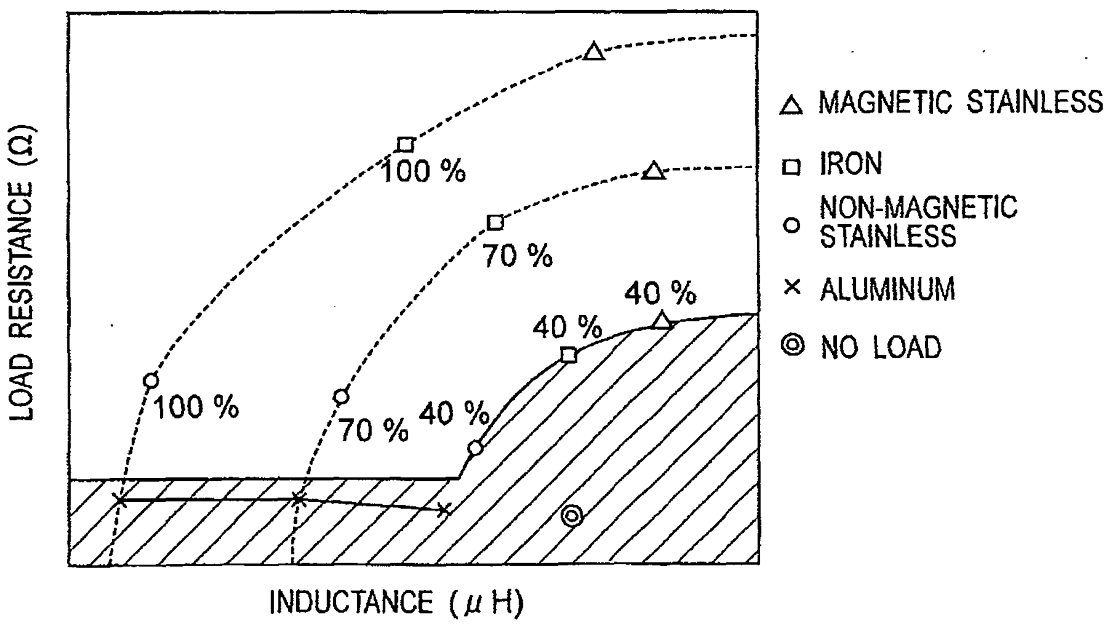
100 %
70 %
40 %
40 %
100 %
70 %
40 %
LOAD RESISTANCE (Ω)
INDUCTANCE (μH)
△ MAGNETIC STAINLESS
□ IRON
○ NON-MAGNETIC STAINLESS
× ALUMINUM
◎ NO LOAD

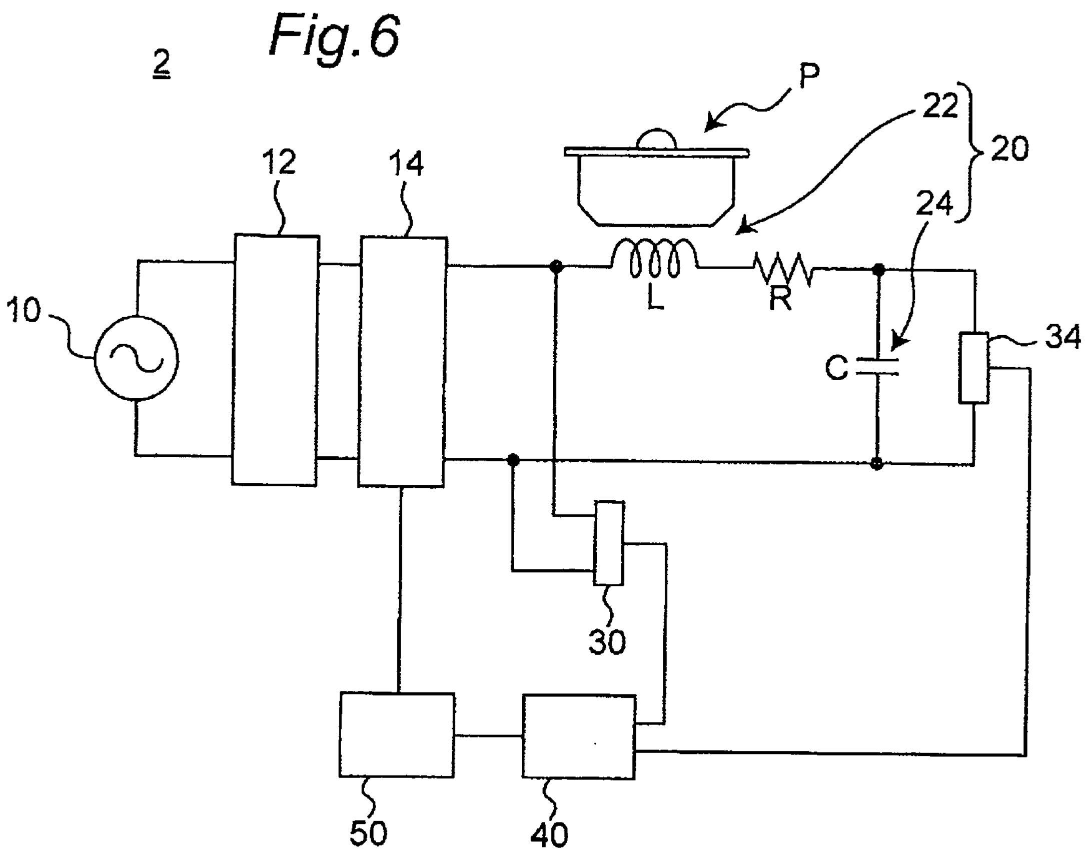
Fig.6
2
P
22
20
24
12
14
10
L
R
C
34
30
50
40

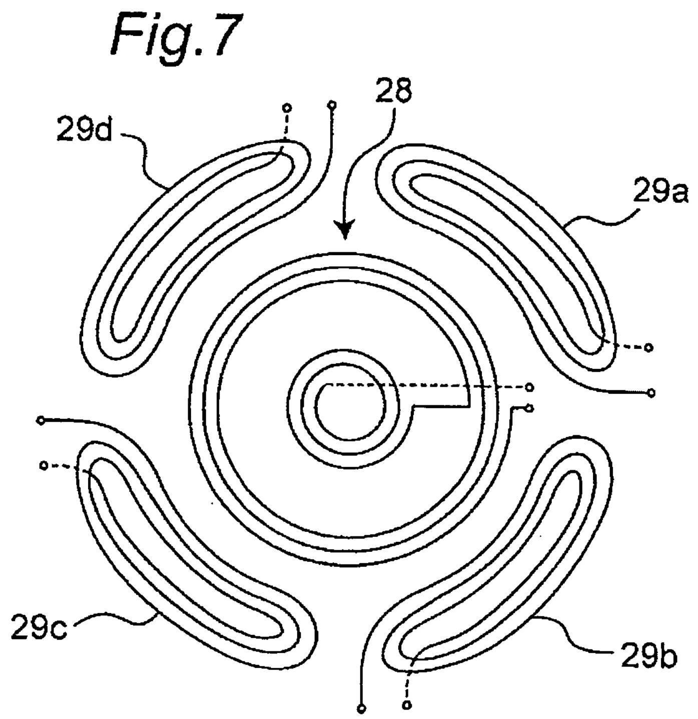
Fig.7
28
29d
29a
29c
29b

Fig.8

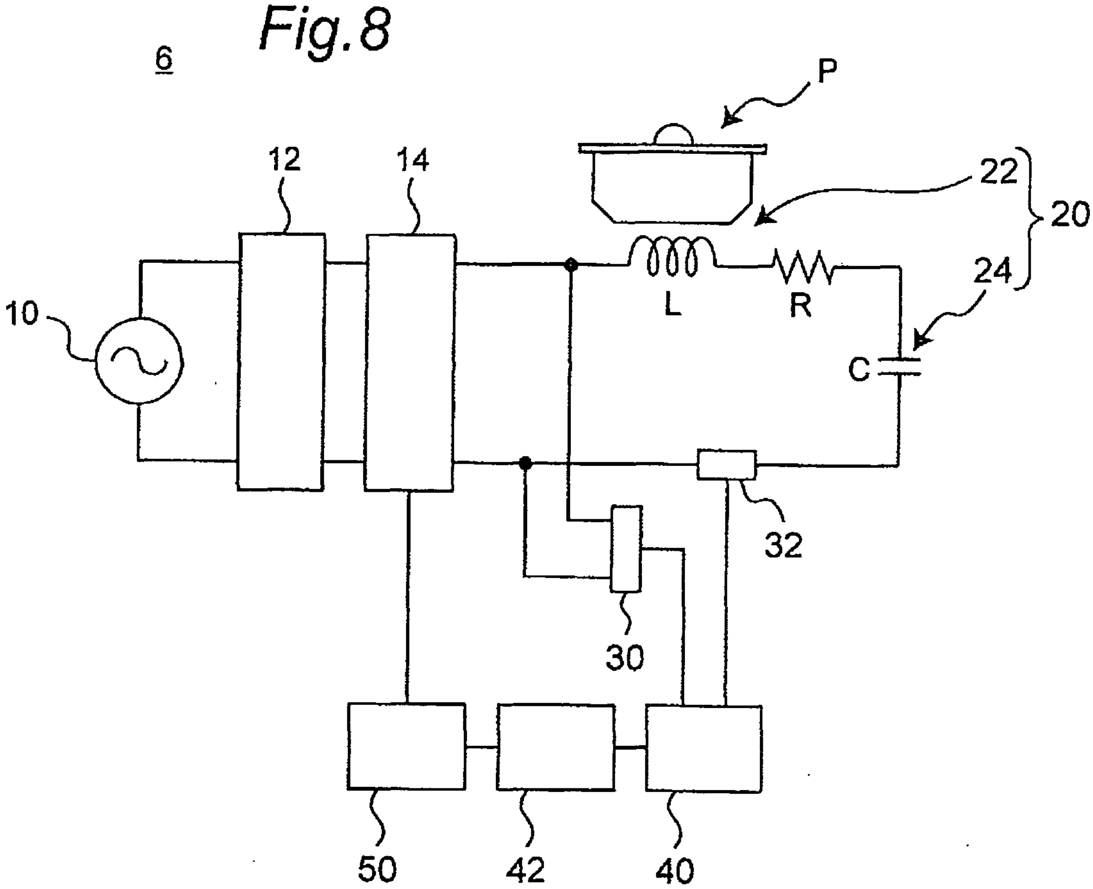

*Fig.9*

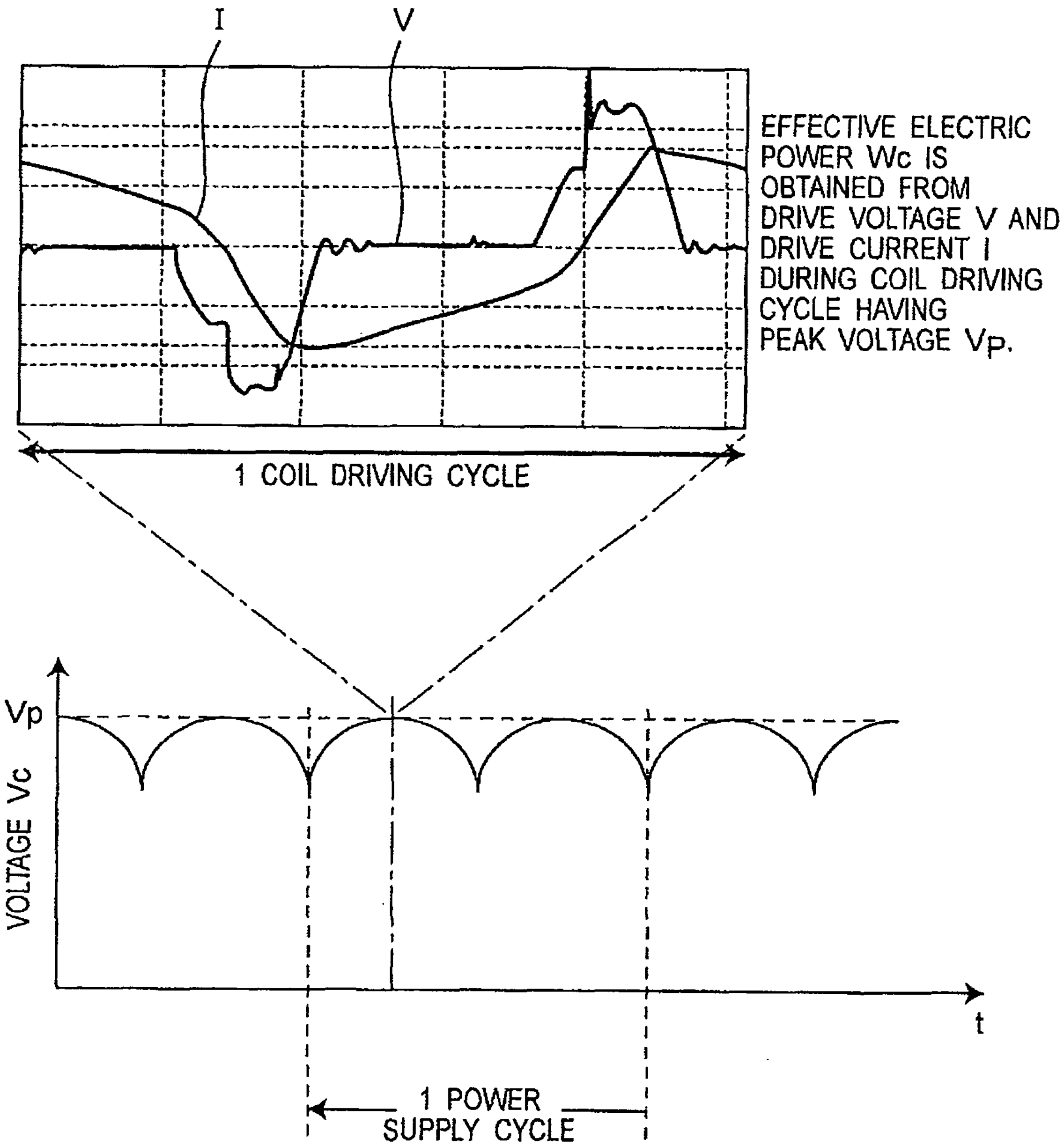


(AVERAGED ELECTRIC POWER)$=Vc^2 / Vp^2 \times Wc$

Fig.10

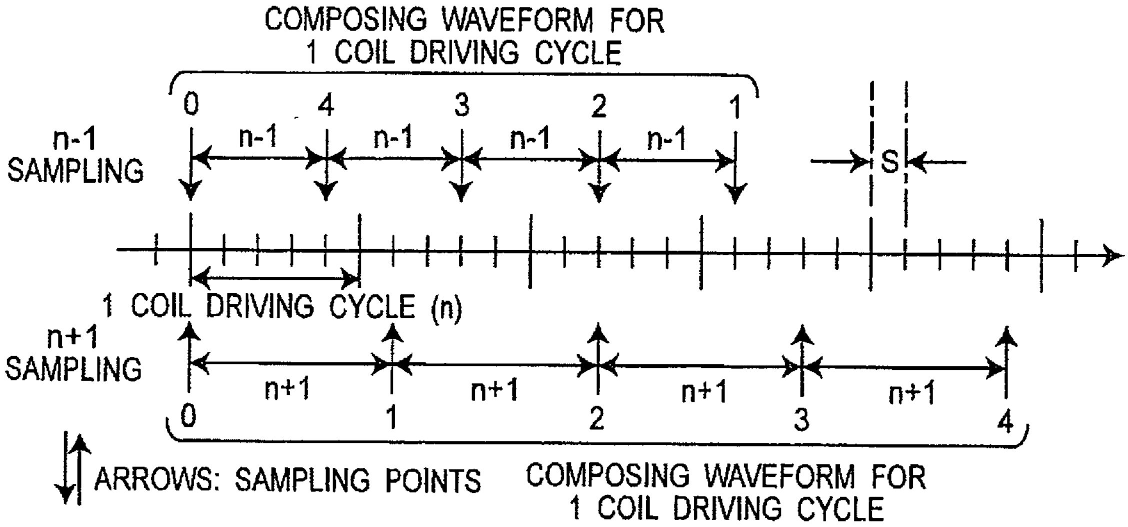
COMPOSING WAVEFORM FOR
1 COIL DRIVING CYCLE
0
4
3
2
1
n-1
SAMPLING
n-1
S
1 COIL DRIVING CYCLE (n)
n+1
SAMPLING
n+1
0
1
2
3
4
ARROWS: SAMPLING POINTS
COMPOSING WAVEFORM FOR
1 COIL DRIVING CYCLE

Fig.11

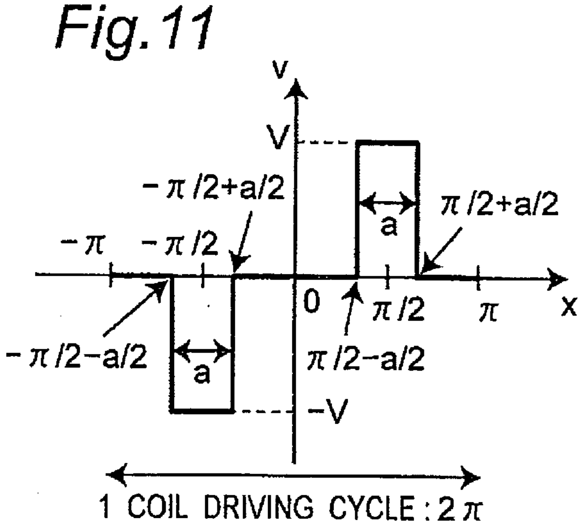
v
V
-π/2+a/2
π/2+a/2
a
-π
-π/2
0
π/2
π
x
-π/2-a/2
π/2-a/2
-V
1 COIL DRIVING CYCLE : 2π

*Fig.12*

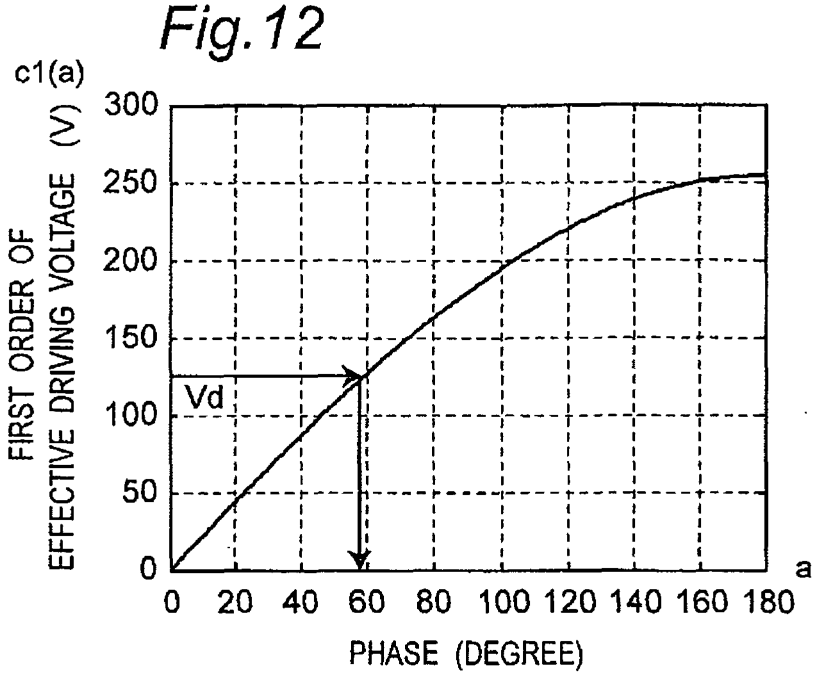
c1(a)
FIRST ORDER OF EFFECTIVE DRIVING VOLTAGE (V)
300
250
200
150
100
50
0
Vd
a
0 20 40 60 80 100 120 140 160 180
PHASE (DEGREE)

*Fig.13*

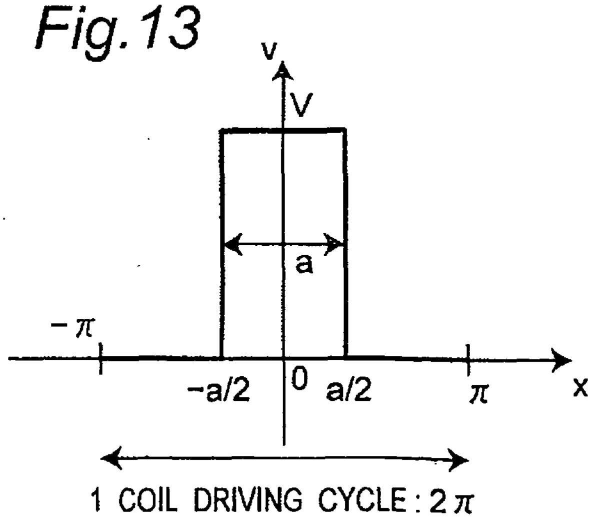
v
V
a
−π
−a/2
0
a/2
π
x
1 COIL DRIVING CYCLE : 2π

*Fig.14*

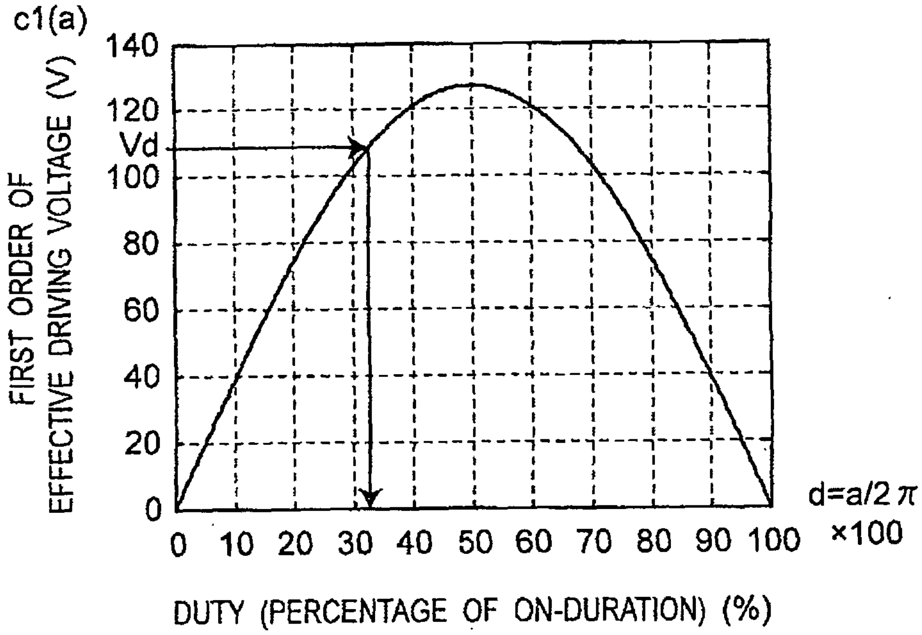
c1(a)
FIRST ORDER OF EFFECTIVE DRIVING VOLTAGE (V)
140
120
Vd
100
80
60
40
20
0
0 10 20 30 40 50 60 70 80 90 100
d=a/2π ×100
DUTY (PERCENTAGE OF ON-DURATION) (%)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61029117 B
- JP 2882060 B
- JP 2745247 B
- EP 2034801 A1
- JP 3460997 B